# FASCICULE DE BREVET EUROPEEN

(11) **EP 2 601 621 B1**
(45) Date de publication et mention de la délivrance du brevet: **28.09.2016**
(21) Numéro de dépôt: 11757380.8
(22) Date de dépôt: 02.08.2011
(51) Int. Cl.: B60C 11/24, B60C 23/00, B60C 23/04, G06Q 10/06, G06Q 10/08

(54) **PROCEDE DE MISE A JOUR D'UNE BASE DE DONNEES DE GESTION D'UNE FLOTTE DE VEHICULES**
VERFAHREN ZUR AKTUALISIERUNG VON VERWALTUNGSDATENBANK EINES FUHRPARKS
METHOD FOR UPDATING A MANAGEMENT DATABASE FOR A VEHICLES FLEET

(30) Priorité: 02.08.2010 FR 1056383
(43) Date de publication de la demande: 12.06.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: CHAMPREDONDE, Jonathan, 63040 Clermont-Ferrand Cedex 9 (FR); CONTRERAS, Marcos, 63040 Clermont-Ferrand Cedex 9 (FR)
(74) Mandataire: Dequire, Philippe Jean-Marie Denis
(86) Numéro de dépôt international: PCT/FR2011/051862
(87) Numéro de publication internationale: WO 2012/017180

(56) Documents cités:
- EP-A2- 0 232 213
- FR-A1- 2 853 857
- FR-A1- 2 916 564
- US-A- 5 657 460
- US-B1- 6 338 045

## Description

La présente invention concerne le domaine de la gestion d'une flotte de véhicules, notamment des pneumatiques de ces véhicules. Elle s'applique, sans toutefois s'y restreindre, plus particulièrement au domaine des véhicules de type génie civil.

Un véhicule de génie civil comprend généralement plusieurs roues munies chacune d'un pneumatique. Le véhicule ainsi que chaque pneumatique comprennent des moyens d'identification visuels, par exemple des identifiants sous la forme de suites de caractères alphanumériques.

Afin de gérer la flotte de véhicules, un opérateur enregistre manuellement quel véhicule comprend quel pneumatique et dans quelle position. Ainsi, lors d'un changement de pneumatique, l'opérateur doit remplacer également manuellement l'identifiant du pneumatique à remplacer par l'identifiant du pneumatique de remplacement ainsi qu'un identifiant de la position du véhicule où le remplacement à été effectué. En outre, il enregistre l'identifiant du véhicule sur lequel le pneumatique a été changé.

L'opérateur, gestionnaire de la base de données, écrit sur papier ces changements observés sur le véhicule. Puis, de retour à son bureau, il met à jour manuellement une base de données en y reportant les différents identifiants. De plus si le véhicule dispose d'un système de surveillance des pneumatiques, par exemple de la pression des pneumatiques, il lui faut également mettre à jour les données y relatives.

Malheureusement, l'opérateur peut commettre des erreurs d'enregistrement des identifiants des pneumatiques, du véhicule ou des positions ou même des données temporelles, par exemple la date du remplacement. Ainsi, par exemple, il est possible que l'opérateur associe l'identifiant du pneumatique de remplacement à l'identifiant d'un véhicule autre que celui sur lequel a été réellement effectué le remplacement et vice-versa. Ces erreurs d'enregistrement rendent la base de donnée peu fiable.

La demande de brevet FR2853857 décrit un traitement tel que le montage ou démontage d'un pneumatique pouvant être mis en oeuvre de manière automatisé en vu d'éviter les erreurs de saisie. L'invention a pour but de fournir une base de donnée plus fiable.

A cet effet, l'invention a pour objet un engin de manutention d'un pneumatique, comprenant des premiers et deuxièmes moyens de lecture respectivement de premiers et deuxièmes moyens à lire, les premiers et deuxièmes moyens de lecture étant agencés de sorte que :
- les premiers moyens de lecture sont aptes à lire les premiers moyens à lire si les premiers moyens de lecture satisfont au moins une première condition prédéterminée associée aux premiers moyens de lecture; et
- les deuxièmes moyens de lecture sont aptes à lire les deuxièmes moyens à lire si les deuxièmes moyens de lecture satisfont au moins une deuxième condition prédéterminée associée aux deuxièmes moyens de lecture.

Les première et deuxième conditions prédéterminées permettent de s'assurer que les premier et deuxième moyens à lire ne peuvent pas être lus de façon intempestive. En effet, lorsqu'il est nécessaire de lire simultanément les premier et deuxième moyens à lire, il est possible de sélectionner les première et deuxième conditions prédéterminées de façon à éviter une lecture intempestive des premier et deuxième moyens à lire. D'autres avantages de l'engin selon l'invention apparaîtront plus tard dans la description. Selon des caractéristiques optionnelles de l'engin:
- Les premiers moyens de lecture sont du type par onde radio et satisfont la première condition prédéterminée associée aux premiers moyens de lecture si les premiers moyens de lecture sont aptes à émettre un signal par onde radio de lecture d'une puissance supérieure ou égale à une première puissance de lecture prédéterminée. Ainsi, par exemple, les premiers moyens de lecture satisfont la première condition prédéterminée associée aux premiers moyens de lecture si les premiers moyens de lecture sont situés à une distance inférieure ou égale à une première distance de lecture prédéterminée associée aux premiers moyens de lecture par rapport aux premiers moyens d'identification.
- En variante, les premiers moyens de lecture satisfont la première condition prédéterminée associée aux premiers moyens de lecture si le signal par onde radio de lecture présente une première fréquence de lecture prédéterminée compatible avec une première fréquence de réception des premiers moyens à lire.
- Les deuxièmes moyens de lecture sont du type par onde radio et satisfont la deuxième condition prédéterminée associée aux deuxièmes moyens de lecture si les deuxièmes moyens de lecture sont aptes à émettre un signal par onde radio de lecture d'une puissance supérieure ou égale à une deuxième puissance de lecture prédéterminée. De même, par exemple, les deuxièmes moyens de lecture satisfont la deuxième condition prédéterminée associée aux deuxièmes moyens de lecture si les deuxièmes moyens de lecture sont situés à une distance inférieure ou égale à une deuxième distance de lecture prédéterminée associée aux deuxièmes moyens de lecture par rapport aux deuxièmes moyens d'identification.
- En variante, les deuxièmes moyens de lecture satisfont la deuxième condition prédéterminée associée aux deuxièmes moyens de lecture si le signal par onde radio de lecture présente une deuxième fréquence de lecture prédéterminée compatible avec une deuxième fréquence de réception des deuxièmes moyens à lire.

Selon une caractéristique optionnelle, l'engin comprend des premiers et deuxièmes moyens de réglage de la puissance respectivement des premiers et deuxièmes signaux de lecture.

Avantageusement, l'engin comprend des premiers et deuxièmes moyens d'activation respectivement de premiers et deuxièmes moyens à activer, les premiers et deuxièmes moyens d'activation étant agencés de sorte que :
- les premiers moyens d'activation sont aptes à activer les premiers moyens à activer si les premiers moyens de d'activation satisfont au moins une première condition prédéterminée associée aux premiers moyens d'activation; et
- les deuxièmes moyens d'activation sont aptes à activer les deuxièmes moyens à activer si les deuxièmes moyens d'activation satisfont au moins une deuxième condition prédéterminée associée aux deuxièmes moyens d'activation.

Selon des caractéristiques optionnelles de l'engin:
- Les premiers moyens d'activation sont du type par onde radio et satisfont la première condition prédéterminée associée aux premiers moyens d'activation si les premiers moyens d'activation sont aptes à émettre un signal par onde radio d'activation d'une puissance supérieure ou égale à une première puissance d'activation prédéterminée. Ainsi, par exemple, les premiers moyens d'activation satisfont la première condition prédéterminée associée aux premiers moyens d'activation si les premiers moyens d'activation sont situés à une distance inférieure ou égale à une première distance d'activation prédéterminée associée aux premiers moyens d'activation par rapport aux premiers moyens à activer, par exemple les premiers moyens d'identification.
- En variante, les premiers moyens d'activation satisfont la première condition prédéterminée associée aux premiers moyens d'activation si le signal par onde radio d'activation présente une première fréquence d'activation prédéterminée compatible avec une première fréquence de réception des premiers moyens à activer.
- Les deuxièmes moyens d'activation sont du type par radio fréquence et satisfont la deuxième condition prédéterminée associée aux deuxièmes moyens d'activation si les deuxièmes moyens d'activation sont aptes à émettre un signal par onde radio d'activation d'une puissance supérieure ou égale à une deuxième puissance d'activation prédéterminée. De même, par exemple, les deuxièmes moyens d'activation satisfont la deuxième condition prédéterminée associée aux deuxièmes moyens d'activation si les deuxièmes moyens d'activation sont situés à une distance inférieure ou égale à une deuxième distance d'activation prédéterminée associée aux deuxièmes moyens d'activation par rapport aux deuxièmes moyens à activer, par exemple les deuxièmes moyens d'identification.
- En variante, les deuxièmes moyens d'activation satisfont la deuxième condition prédéterminée associée aux deuxièmes moyens d'activation si le signal par onde radio d'activation présente une deuxième fréquence d'activation prédéterminée compatible une deuxième fréquence des deuxièmes moyens à activer.

Selon une caractéristique optionnelle, l'engin comprend des premiers et deuxièmes moyens de réglage de la puissance respectivement des premiers et deuxièmes signaux d'activation.

L'invention a également pour objet un véhicule comprenant au moins un pneumatique et comprenant plusieurs zones spatiales prédéterminées, dans lequel chaque zone spatiale prédéterminée comprend des premiers moyens d'identification de la zone spatiale et chaque pneumatique comprend des deuxièmes moyens d'identification du pneumatique, chaque pneumatique étant situé dans une seule zone spatiale prédéterminée du véhicule, les premiers et deuxièmes moyens d'identification étant agencés de sorte que :
- les premiers moyens d'identification sont lisibles si les premiers moyens d'identification satisfont au moins une première condition prédéterminée associée aux premiers moyens d'identification; et
- les deuxièmes moyens d'identification sont lisibles si les deuxièmes moyens d'identification satisfont au moins une deuxième condition prédéterminée associée aux deuxièmes moyens d'identification.

Les première et deuxième conditions prédéterminées permettent de s'assurer que les premier et deuxième moyens d'identification ne peuvent pas être lus de façon intempestive. En effet, lorsqu'il est nécessaire de lire simultanément les premier et deuxième moyens d'identification, il est possible de sélectionner les première et deuxième conditions prédéterminées de façon à éviter une lecture intempestive des premier et deuxième moyens d'identification. D'autres avantages du véhicule selon l'invention apparaîtront plus tard dans la description. Selon des caractéristiques optionnelles du véhicule:
- Les premiers moyens d'identification sont du type par onde radio et satisfont la première condition prédéterminée associée aux premiers moyens d'identification si les premiers moyens d'identification sont aptes à recevoir un signal par onde radio de lecture d'une puissance supérieure ou égale à une première puissance d'identification prédéterminée.
- En variante, les premiers moyens d'identification satisfont la première condition prédéterminée associée aux premiers moyens d'identification si les premiers moyens d'identification sont aptes à recevoir un signal par onde radio de lecture d'une première fréquence de lecture prédéterminée.
- Les deuxièmes moyens d'identification sont du type par onde radio et satisfont la deuxième condition prédéterminée associée aux deuxièmes moyens d'identification si les deuxièmes moyens d'identification sont aptes à recevoir un signal par onde radio de lecture d'une puissance supérieure ou égale à une deuxième puissance d'identification prédéterminée.
- En variante, les deuxièmes moyens d'identification satisfont la deuxième condition prédéterminée associée aux deuxièmes moyens d'identification si les deuxièmes moyens d'identification sont aptes à recevoir un signal par onde radio de lecture d'une deuxième fréquence de lecture prédéterminée.

L'engin de manutention et le véhicule selon l'invention permettent notamment d'automatiser la mise la jour d'une base de données. L'engin de manutention permet de remplacer des pneumatiques trop lourds et encombrants pour être remplacés manuellement, par exemple des pneumatiques pour véhicule de type génie civil. Les remplacements ne nécessitent donc pas nécessairement la disponibilité de l'opérateur préposé à l'enregistrement des remplacements de pneumatique. Ainsi, la mise à jour de la base de données s'effectue de façon automatisée et en temps réel. Cette automatisation rend le procédé de mise à jour plus robuste et la base de données plus fiable.

D'autres conditions peuvent également devoir être satisfaites pour mettre à jour cette association. Ces conditions peuvent être vérifiées durant des étapes ultérieures ou antérieures à l'étape durant laquelle on satisfait simultanément les premières et deuxièmes conditions prédéterminées au moins une fois.

En outre, les pneumatiques d'un même véhicule de génie civil s'usent différemment les uns des autres. Cette différence d'usure est accentuée par rapport à d'autres types de véhicules. Les remplacements ne consistent donc pas uniquement à remplacer un pneumatique usagé par un pneumatique neuf mais parfois peuvent consister à échanger, entre eux, plusieurs pneumatiques présentant des usures différentes au sein d'un même véhicule. Le procédé selon l'invention permet également de mettre à jour la base de données lors de tels remplacements.

En outre, il n'est pas possible de mettre à jour la base de donnée par accident.

De préférence, on met à jour l'association entre l'identifiant de la zone spatiale dans laquelle est situé le pneumatique à remplacer ou de remplacement et l'identifiant du pneumatique à remplacer ou de remplacement de la base de données si on satisfait seulement les deuxièmes conditions prédéterminées lors de l'étape faisant directement suite à une étape dans laquelle on satisfait au moins les premières et deuxièmes conditions prédéterminées simultanément au moins une fois.

Une étape fait directement suite à une autre étape lorsque aucune des premières et deuxièmes conditions prédéterminées n'a été satisfaite entre lesdites étapes.

Dans ce mode de réalisation, cela signifie implicitement que le pneumatique à remplacer a été retiré du véhicule. Il est donc possible de mettre à jour la base de donnée afin d'enregistrer que le pneumatique à remplacer n'est plus dans la zone dans laquelle était situé le pneumatique à remplacer ou de remplacement.

De préférence, on met à jour l'association entre l'identifiant de la zone spatiale dans laquelle est situé le pneumatique à remplacer ou de remplacement et l'identifiant du pneumatique à remplacer ou de remplacement de la base de données si on satisfait seulement les deuxièmes conditions prédéterminées lors de l'étape précédant directement une étape dans laquelle on satisfait au moins les premières et deuxièmes conditions prédéterminées simultanément au moins une fois.

Une étape précède directement une autre étape lorsque aucune des premières et deuxièmes conditions prédéterminées n'a été satisfaite entre lesdites étapes.

Dans ce mode de réalisation, cela signifie implicitement que le pneumatique de remplacement a été installé sur le véhicule. Il est donc possible de mettre à jour la base de donnée afin d'enregistrer que le pneumatique de remplacement est désormais dans la zone dans laquelle est situé le pneumatique à remplacer ou de remplacement.

L'invention sera mieux comprise à la lecture de la description qui va suivre, donnée uniquement à titre d'exemple non limitatif et faite en se référant aux dessins dans lesquels :
- la figure 1 est une vue schématique d'un véhicule selon un premier mode de l'invention;
- les figures 2A, 2B, 2C et 2D sont des vues en coupe axiale de pneumatiques du véhicule de la figure 1 selon plusieurs variantes;
- la figure 3 est une vue schématique d'un engin de manutention selon l'invention;
- les figures 4 et 5 sont des vues respectivement en perspective et de côté d'extrémités de bras de manutention de l'engin de la figure 3;
- la figure 6 est une vue schématique d'un véhicule selon un deuxième mode de l'invention;
- les figures 7A à 7H et 8A à 8H illustrent plusieurs étapes d'un procédé de mise à jour d'une base de données selon un premier mode de réalisation de l'invention;
- les figures 9A à 9K et 10A à 10K illustrent plusieurs étapes d'un procédé de mise à jour d'une base de données selon un deuxième mode de réalisation de l'invention.

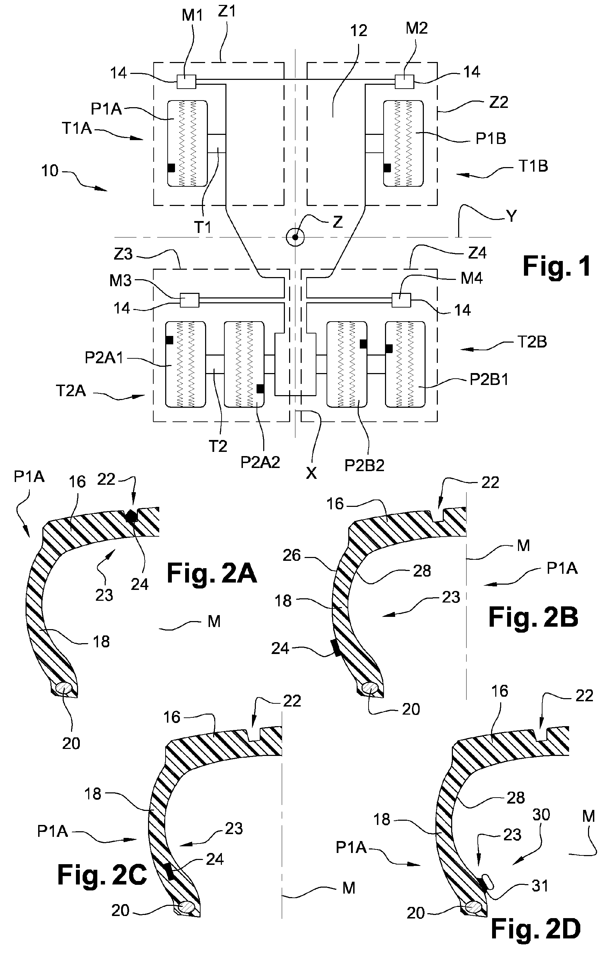

On a représenté sur la figure 1 un véhicule selon un premier mode de réalisation de l'invention désigné par la référence générale 10. Sur les figures, on a représenté des axes X, Y, Z orthogonaux entre eux correspondant aux orientations habituelles longitudinale (X), transversale (Y) et verticale (Z) d'un véhicule. Le véhicule 10 est de type génie civil encore appelé tombereau rigide ou dumper rigide.

Le véhicule 10 comprend une caisse 12. Le véhicule 10 comprend également des premier et deuxième essieux T1, T2 respectivement situés à l'avant et à l'arrière du véhicule 10 et montés rotatifs sur la caisse 12. Chaque essieu T1 et T2 comprend deux côtés opposés respectivement référencés T1A, T1 B et T2A, T2B situés de part et d'autre du plan médian transversal du véhicule parallèle aux directions X, Z. Dans ce qui suit, on fait référence aux côtés « droit » et « gauche » en regardant dans le sens de l'essieu T2 vers l'essieu T1. Chaque côté gauche T1A et droit T1 B de l'essieu T1 comprend un pneumatique respectivement référencé P1A et P1B. Chaque côté gauche T2A et droit T2B comprend deux pneumatiques respectivement référencés P2A1, P2A2 et P2B1, P2B2. Chaque pneumatique P2A1, P2B1 est plus éloigné du plan médian transversal que respectivement le pneumatique P2A2, P2B2. Chaque côté de l'essieu T2 comprend donc deux positions 1 et 2. Chaque position 1 des côtés gauche et droit porte respectivement le pneumatique P2A1 et P2B1. Chaque position 2 des côtés gauche et droit porte respectivement le pneumatique P2A2 et P2B2. De préférence, tous les pneumatiques sont identiques. En variante, les pneumatiques présentent des sculptures ou des structures différentes selon les utilisations.

Le véhicule 10 est divisé en plusieurs zones spatiales Z1, Z2, Z3, Z4 délimitées par des lignes pointillées sur la figure 1. La zone Z1 comprend le pneumatique P1A, la zone Z2 comprend le pneumatique P1B, la zone Z3 comprend les pneumatiques P2A1, P2A2 et la zone Z4 comprend les pneumatiques P2B1, P2B2. Le véhicule 10 comprend également des moyens M1, M2, M3, M4 d'identification respectivement de chaque zone Z1, Z2, Z3, Z4. Les moyens M1-M4 sont agencés de façon à être lisibles si les moyens M1-M4 satisfont une condition prédéterminée associée aux moyens M1-M4. Les moyens M1-M4 sont du type par onde radio et satisfont la condition prédéterminée associée au moyen M1-M4 si les moyens M1-M4 sont aptes à recevoir un signal par onde radio de lecture d'une puissance supérieure ou égale à une puissance d'identification prédéterminée. Les moyens M1-M4 comprennent chacun un transpondeur 14 de type passif. En variante, chaque transpondeur 14 est de type actif ou semi-passif. Un transpondeur actif ou semi-passif dispose de moyens internes autonomes d'alimentation en énergie. Un transpondeur actif est, de plus, capable de transmettre des données spontanément sans sollicitation extérieure. Un transpondeur passif répond uniquement a une sollicitation extérieure qui lui fournit également l'énergie pour fonctionner.

Les bandes radio utilisées par les transpondeurs sont choisies parmi les bandes LF, MF, HF, VHF et UHF.

On a représenté sur les figures 2A-2D plusieurs variantes d'un des pneumatiques du véhicule de la figure 1, en l'espèce le pneumatique P1A. Le pneumatique P1A comprend une bande de roulement 16 ainsi que deux flancs 18 situés de part et d'autre d'un plan axial médian M du pneumatique et dont un seul est représenté sur les figures 2A-2D. Le pneumatique P1A comprend également deux tringles circulaires 20 situées à chaque extrémité axialement interne de chaque flanc 18. De plus, la bande de roulement 16 comporte des sculptures 22, notamment un sillon circonférentiel.

Dans les variantes illustrées sur les figures 2A à 2C, le pneumatique P1A comprend des moyens 23 d'identification du pneumatique P1A comprenant un transpondeur 24 de type passif. En variante, le transpondeur 24 est de type actif ou semi-actif.

Comme représenté sur la figure 2A, le transpondeur 24 est situé dans le sillon circonférentiel 22 et est fixé par collage ou blocage mécanique.

En variante et comme représenté sur la figure 2B, le transpondeur 24 est situé sur une face externe 26 du flanc 18 et est fixé par collage par l'intermédiaire d'un patch (non représenté) ou par des crochets de fixation (non représentés). En variante, le transpondeur 24 peut être fixé sur une face interne 28 du flanc 18.

En variante et comme représenté sur la figure 2C, le transpondeur 24 est noyé dans la gomme du pneumatique P1A. Il est situé dans la gomme du flanc 18. En variante, le transpondeur 24 est situé dans la gomme de la bande de roulement 16.

Dans la variante illustrée sur la figure 2D, le pneumatique P1A comprend un dispositif 30 de surveillance de pression (Tyre Pression Monitoring System) comprenant les moyens 23 d'identification du pneumatique P1A. Les moyens 23 comprennent une bobine (non représentée). Comme représenté sur la figure 2D, le dispositif 30 est situé sur la face interne 28 du flanc 18 et est fixé par collage par l'intermédiaire d'un patch 31.

Dans chacune des variantes illustrées, les moyens d'identification 23 sont agencés de façon que les moyens d'identification 23 sont lisibles si les moyens d'identification 23 satisfont une condition prédéterminée associée aux moyens d'identification 23. Les moyens d'identification 23 sont du type par onde radio et satisfont la condition prédéterminée associée aux moyens d'identification 23 si les moyens d'identification 23 sont aptes à recevoir un signal par onde radio de lecture d'une puissance supérieure ou égale à une puissance d'identification prédéterminée.

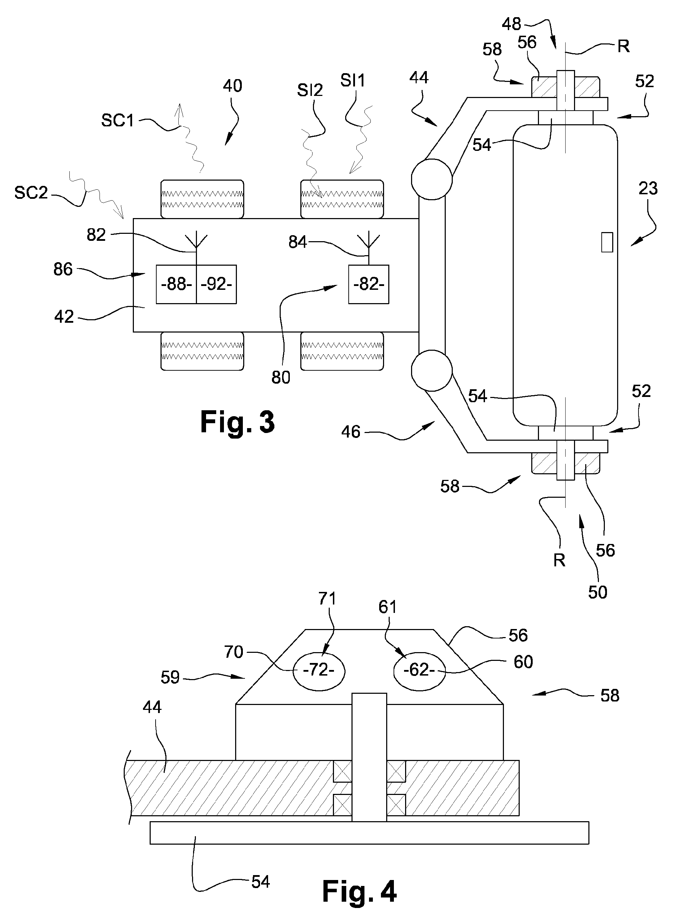

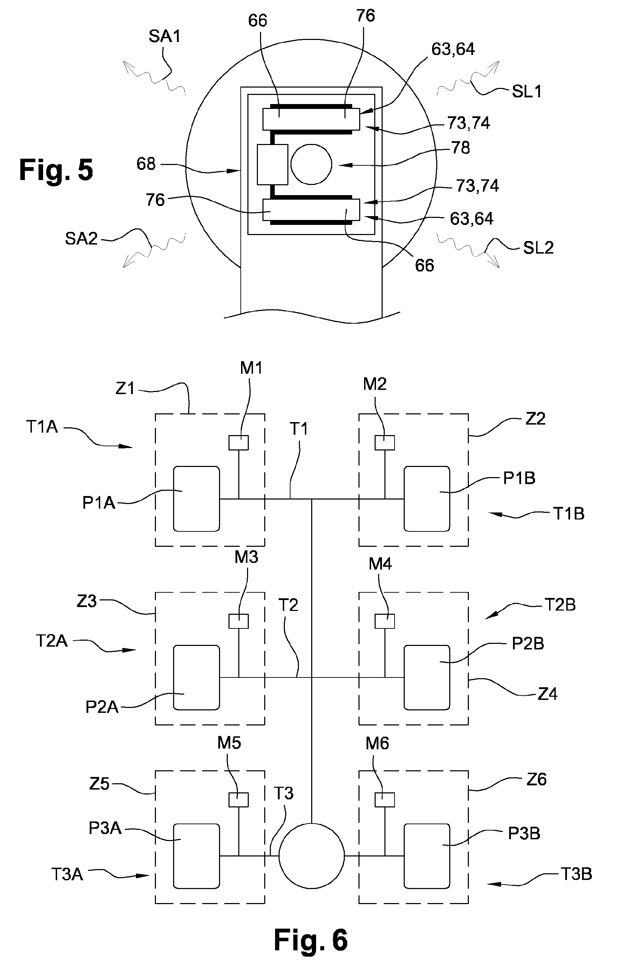

On a représenté sur la figure 3 un engin de manutention selon l'invention désigné par la référence générale 40 et sur les figures 4 et 5 des dispositifs et moyens de fonctionnement de cet engin.

L'engin 40 comprend une caisse 42 sur laquelle sont montés deux bras articulés 44, 46 de préhension de pneumatique. Chaque bras 44, 46 comprend deux extrémités 48, 50.

Chaque extrémité 48, 50 est munie de moyens 52 de mise en rotation du pneumatique autour d'un axe R. Les moyens 52 comprennent une coupole 54 motorisée de préhension d'un pneumatique rotative autour de l'axe R.

Chaque extrémité 48, 50 comprend également un boîtier 56 de protection de dispositifs d'activation 58 et de lecture 59 des moyens M1-M4 d'identification des zones Z1-Z4 et des moyens 23 d'identification des pneumatiques.

Le dispositif 58 d'activation comprend des moyens 60 d'activation des moyens M1-M4 d'identification des zones Z1-Z4 et des moyens 61 d'activation des moyens 23 d'identification des pneumatiques. En l'espèce, les moyens d'activation 60, 61 sont communs et désignés par la référence 62. Les moyens d'activation 60, 61 sont agencés de sorte que les moyens d'activation 60 sont aptes à activer les moyens d'identification M1-M4 si les moyens de d'activation 60 satisfont au moins une condition prédéterminée associée aux moyens d'activation 60 et de sorte que les moyens d'activation 61 sont aptes à activer les moyens d'identification 23 si les moyens d'activation 61 satisfont au moins une condition prédéterminée associée aux moyens d'activation 61.

En référence à la figure 5, les moyens d'activation 62 sont du type par onde radio et comprennent des moyens 63 de génération d'un signal par onde radio d'activation SA1 des moyens d'identification M1-M4 et des moyens 64 de génération d'un signal par onde radio d'activation SA2 des moyens d'identification 23. Les moyens d'activation 60 satisfont la condition prédéterminée associée aux moyens d'activation 60 si les moyens d'activation 60 sont aptes à émettre le signal d'activation SA1 avec une puissance supérieure ou égale à une puissance d'activation prédéterminée. De façon analogue, les moyens d'activation 61 satisfont la condition prédéterminée associée aux moyens d'activation 61 si les moyens d'activation 61 sont aptes à émettre le signal d'activation SA2 avec une puissance supérieure ou égale à une puissance d'activation prédéterminée. Les moyens 63, 64 comprennent deux antennes 66.

En l'espèce, chaque antenne 66 comprend une bobine à air ou comprenant un noyau en matériau magnétique, par exemple en ferrite. Chaque antenne est apte à transmettre une onde porteuse modulée en fréquence autour de 125 kHz. Le dispositif 58 comprend des moyens 68 de contrôle des signaux d'activation SA1, SA2. Les moyens 68 comprennent des moyens de modulation en fréquence des signaux d'activation SA1, SA2, des moyens d'amplification des signaux d'activation SA1, SA2 et des moyens de réglages de la puissance des signaux d'activation SA1, SA2.

Le dispositif 59 de lecture comprend des moyens 70 de lecture des moyens M1-M4 d'identification des zones Z1-Z4 et des moyens 71 de lecture des moyens 23 d'identification des pneumatiques. En l'espèce, les moyens d'activation 70, 71 sont communs et désignés par la référence 72. Les moyens de lecture 70, 71 sont agencés de façon que les moyens de lecture 70 sont aptes à lire les moyens d'identification M1-M4 si les moyens de lecture 71 satisfont au moins une condition prédéterminée associée aux moyens de lecture 70 et de façon que les moyens de lecture 71 sont aptes à lire les moyens d'identification 23 si les moyens de lecture 71 satisfont au moins une condition prédéterminée associée aux moyens de lecture 71.

Les moyens de lecture 72 sont du type par onde radio et comprennent des moyens 73 de génération d'un signal par onde radio de lecture SL1 des moyens d'identification M1-M4 et des moyens 74 de génération d'un signal par onde radio de lecture SL2 des moyens d'identification 23. Les moyens de lecture 70 satisfont la condition prédéterminée associée aux moyens de lecture 70 si les moyens de lecture 70 sont aptes à émettre le signal de lecture SL1 avec une puissance supérieure ou égale à une puissance de lecture prédéterminée. De façon analogue, les moyens de lecture 71 satisfont la condition prédéterminée associée aux moyens de lecture 71 si les moyens de lecture 71 sont aptes à émettre le signal de lecture SL2 avec une puissance supérieure ou égale à une puissance de lecture prédéterminée. Les puissances prédéterminées d'activation des moyens 60, 61 et de lecture des moyens 70, 71 sont sensiblement égales.

En l'espèce, les moyens 73, 74 comprennent deux antennes 76. Le dispositif 59 comprend des moyens 78 de contrôle des signaux de lecture SL1, SL2. Les moyens 78 comprennent des moyens de modulation en fréquence des signaux de lecture SL1, SL2, des moyens d'amplification des signaux de lecture SL1, SL2 et des moyens de réglages de la puissance des signaux de lecture SL1, SL2.

L'engin 40 comprend également des moyens 80 de communication entre l'engin 40 et chaque véhicule 10 et/ou pneumatique. Les moyens 80 comprennent des moyens de réception 82 de signaux SI1, SI2 de données provenant respectivement des moyens d'identification M1-M4 et des moyens d'identification 23. En l'espèce, les moyens 82 comprennent une antenne 84 basse fréquence.

L'engin 40 comprend également des moyens 86 de communication entre l'engin 40 un centre de communication distant comprenant une base de données B de gestion d'une flotte de véhicules 10. Les moyens de communication 86 comprennent des moyens 88 d'émission d'un signal de données SC1 depuis l'engin 40 vers le centre ainsi que des moyens de réception 90 d'un signal de données SC2 provenant du centre C vers l'engin 40. En l'espèce, les moyens 88, 90 comprennent une antenne 92 radio fréquence haute fréquence.

On a représenté sur la figure 6 un véhicule selon un deuxième mode de réalisation. Les éléments analogues à ceux représentés sur les figures précédentes sont désignés par des références identiques.

A la différence du véhicule 10 selon la premier mode de réalisation, le véhicule 10 comprend des premier, deuxième et troisième essieux T1, T2, T3 et montés rotatifs sur la caisse 12. L'essieu T3 comprend deux côtés opposés respectivement référencés T3A, T3B situés de part et d'autre du plan médian transversal du véhicule parallèle aux directions X, Z. Chaque côté gauche T1A, T2A et T3A et droit T1 B, T2B et T3B des essieux T1, T2, T3 comprend un pneumatique respectivement référencés P1A, P2A et P3A, P1B, P2B et P3B.

Le véhicule 10 est divisé en plusieurs zones spatiales Z1, Z2, Z3, Z4, Z5, Z6 délimitée par des lignes pointillées sur la figure 6. Chaque zone Z1, Z2, Z3, Z4, Z5 et Z6 comprend respectivement le pneumatique P1A, P1B, P2A, P2B, P3A et P3B. Le véhicule 10 comprend également des moyens M1, M2, M3, M4, M5 et M6 d'identification respectivement de chaque zone Z1, Z2, Z3, Z4, Z5 et Z6. Les moyens M1-M6 comprennent chacun un transpondeur 14 de type passif. En variante, chaque transpondeur 14 est de type actif ou semi-actif.

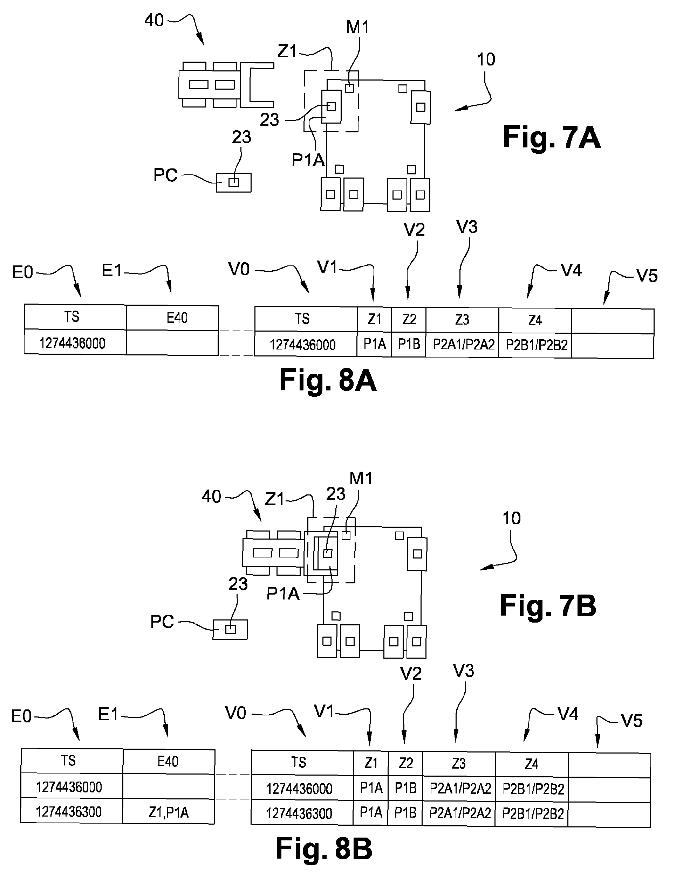

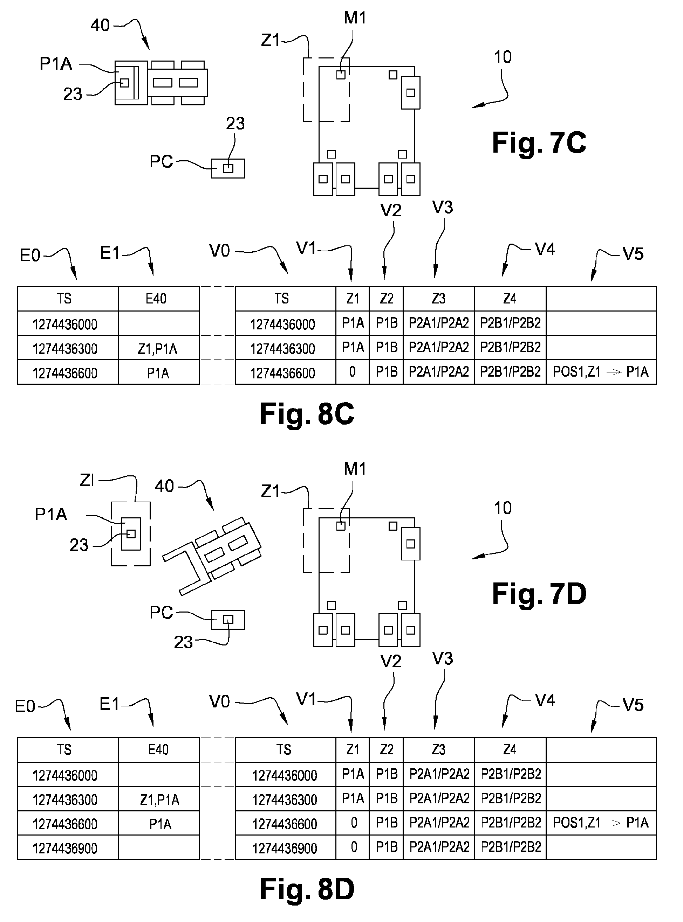

On va maintenant décrire un procédé de gestion d'une base de données B -ne faisant pas partie de l'invention-en référence aux figures 7A à 7F et 8A à 8F. Sur ces figures on a illustré différentes étapes d'un remplacement du pneumatique à remplacer P1A du véhicule 10 selon le premier mode de réalisation par un pneumatique de remplacement PC.

On a représenté sur la figure 7A le véhicule 10 comprenant le pneumatique P1Aà remplacer, le pneumatique de remplacement PC et l'engin de manutention 40.

On a représenté sur la figure 8A une partie de la base de données B concernant le véhicule 10 et l'engin 40. Dans une colonne E0, la base B comprend un indicateur temporel ou timbre horaire TS. On rappelle qu'un timbre horaire ou "timestamp" est un marqueur de temps informatique correspondant au nombre de secondes écoulées depuis le 1^{er} janvier 1970. Par exemple, la valeur 1274436000 correspond à la date du 21/05/2010 à 12 heures 0 minutes 0 secondes. Dans une colonne E1, la base B comprend, si ils sont été activés et si ils ont été lus par l'engin 40, l'identifiant Z1-Z4 de chaque zone Z1-Z4 du véhicule 10 et l'identifiant de chaque pneumatique. Les colonnes E0, E1 concernent l'engin de manutention 40.

Dans une colonne V0, la base B comprend le même timbre horaire TS que la colonne E0.

Dans des colonnes V1-V4, la base B comprend des données relatives aux zones spatiales Z1-Z4 et des données relatives aux pneumatiques du véhicule 10. Chaque donnée relative à chaque pneumatique du véhicule 10 est associée à une seule zone spatiale Z1-Z4 du véhicule 10. En l'espèce, les données comprennent les identifiants des zones Z1-Z4 et des pneumatiques du véhicule 10. Chaque colonne V1-V4 comprend l'identifiant ou les identifiants du ou des pneumatiques situés dans la zone Z1-Z4 correspondante. Dans le cas des zones Z3, Z4, les positions interne POS1 et externe POS2 sont enregistrées sous la forme POS1/POS2 où POS1 désigne la position la plus éloignée du plan transversal médian du véhicule et POS2 désigne la position la plus proche du plan transversal médian du véhicule.

Dans une colonne V5, la base B comprend des opérations effectuées sur le véhicule 10 et déterminées grâce à un algorithme de mise à jour de la base B en fonction des statuts successifs des autres colonnes de la base B. Ces opérations prédéterminées sont représentées comme suit:
- POSX, ZY → PW signifie que le pneumatique PW a été retiré de la position X de la zone ZY du véhicule, et
- PW → POSX, ZY signifie que le pneumatique PW a été monté sur la position X de la zone ZY du véhicule.

Les colonnes V0-V5 concernent le véhicule 10.

Au cours de ce procédé, l'engin 40 active et lit les identifiants des zones spatiales Z1-Z4, des pneumatiques du véhicule 10 et du pneumatique de remplacement PC.

On détermine l'identifiant Z1-Z4 de la zone spatiale où a lieu le remplacement si on satisfait des premières conditions prédéterminées. Ces premières conditions comprennent les conditions associées aux moyens de lecture 70 et aux moyens d'identification M1-M4. Cette zone spatiale est appelée zone de travail. On satisfait ces premières conditions prédéterminées si on reçoit l'identifiant de la zone spatiale de travail. En d'autres termes, on satisfait les premières conditions prédéterminées si la puissance des signaux SA1 et SL1 est suffisante pour lire les moyens d'identification M1-M4. En plus des conditions associées aux moyens de lecture 70 et aux moyens d'identification M1-M4, dans l'exemple illustré, les premières conditions prédéterminées comprennent la condition prédéterminée associée aux moyens d'activation 60 des moyens d'identification M1-M4.

De façon analogue, on détermine l'identifiant 23 du pneumatique à remplacer ou de remplacement si on satisfait des deuxièmes conditions prédéterminées. Ces deuxièmes conditions comprennent les conditions associées aux moyens de lecture 71 et aux moyens d'identification 23. On satisfait ces deuxièmes conditions prédéterminées si on reçoit l'identifiant du pneumatique à remplacer ou de remplacement. En d'autres termes, on satisfait les deuxièmes conditions prédéterminées si la puissance des signaux SA2 et SL2 est suffisante pour activer et lire les moyens d'identification 23. En plus des conditions associées aux moyens de lecture 71 et aux moyens d'identification 23, dans l'exemple illustré, les deuxièmes conditions prédéterminées comprennent la condition prédéterminée associée à ces moyens d'activation 61 des moyens d'identification 23.

Sur la figure 8A, la colonne E0 comprend un index horaire correspondant à l'heure de début du procédé. Les moyens d'identification M1-M4 des zones Z1-Z4 et les moyens d'identification 23 de chaque pneumatique du véhicule 10 et du pneumatique PC ne satisfont pas les premières et deuxièmes conditions prédéterminées. Ainsi, on ne reçoit donc aucun identifiant de zone spatiale ou de pneumatique et la colonne E1 est vide. Les colonnes V1-V4 contiennent les derniers identifiants connus pour le véhicule 10. Aucune étape n'ayant été effectuée précédemment, la colonne V5 est vide.

Comme illustré sur la figure 7B, l'engin 40 pénètre dans la zone Z1, dite de travail, et saisit le pneumatique P1A.

Tout d'abord, comme on satisfait les premières conditions prédéterminées, on active les moyens d'identification M1 de la zone spatiale de travail Z1, grâce aux moyens d'activation 60 et on détermine, grâce aux moyens de lecture 70, l'identifiant Z1 de la zone spatiale Z1. Pour ce faire, les moyens 63, 73 génèrent respectivement des signaux d'activation SA1 et de lecture SL1 à destination des moyens d'identification M1 de la zone Z1.

Simultanément, comme on satisfait les deuxièmes conditions prédéterminées, on active les moyens d'identification 23 du pneumatique à remplacer PA1 grâce aux moyens d'activation 61 et on détermine, grâce aux moyens de lecture 71, l'identifiant P1A du pneumatique à remplacer P1A. Pour ce faire, les moyens 61, 71 génèrent respectivement des signaux d'activation SA2 et de lecture SL2 à destination des moyens d'identification 23 du pneumatique à remplacer P1A. En retour, les moyens M1 et 23 émettent les identifiants Z1 et P1A à destination des moyens 82 sous la forme des signaux SI1, SI2.

On met à jour la base de données au moyen de données d'actualisation comprenant l'identifiant du pneumatique à remplacer PA1 et l'identifiant de la zone spatiale de travail Z1. Puis, on transmet, grâce aux moyens 86, les identifiants Z1 et P1A depuis l'engin 40 à la base de données B sous la forme d'un signal SC1. Comme illustré sur la figure 8B, la colonne E1 comprend les identifiants Z1, PA1 de la zone Z1 et du pneumatique P1A.

Puis, on retire le pneumatique P1A du véhicule 10 comme illustré sur la figure 7C. Comme illustré sur la figure 8C, la colonne E1 comprend toujours l'identifiant P1A mais plus l'identifiant Z1. En effet, on ne satisfait plus les premières conditions prédéterminées mais seulement les deuxièmes conditions prédéterminées. L'étape illustrée à la figure 7C durant laquelle on satisfait seulement les deuxièmes conditions prédéterminées fait directement suite à l'étape illustrée à la figure 7B durant laquelle on satisfait simultanément les premières et deuxièmes conditions prédéterminées au moins une fois. On met donc à jour la base de données B au moyen de données d'actualisation comprenant notamment des données relatives à l'association entre l'identifiant Z1 de la zone spatiale de travail et l'identifiant du pneumatique à remplacer P1A. L'algorithme gérant la mise à jour de la base de donnée a donc détecté que le pneumatique P1A n'est plus associé à la zone de travail Z1. La colonne V1 comprend donc 0 qui symbolise l'absence de pneumatique dans la zone de travail Z1. La colonne V5 comprend POS1, Z1 → P1A qui indique que le pneumatique P1A a été retiré de la position 1 de la zone Z1 du véhicule 10.

Comme représenté sur la figure 7D, on a déplacé le pneumatique P1A à remplacer depuis la zone de travail Z1 du véhicule 10 vers une zone de stockage intermédiaire ZI. La zone de stockage intermédiaire ZI est située à une distance du véhicule 10 telle que les moyens d'identification 23 pneumatique P1A ne pourront plus être activés, ni lus intempestivement par les moyens d'activation 61 et de lecture 71 de l'engin 40 simultanément avec des moyens d'identification 23 d'un autre pneumatique. Sur la figure 7D, ni les premières, ni les deuxièmes conditions prédéterminées ne sont satisfaites. On met alors à jour la base de données B au moyen de données d'actualisation. La colonne E1 est donc vide.

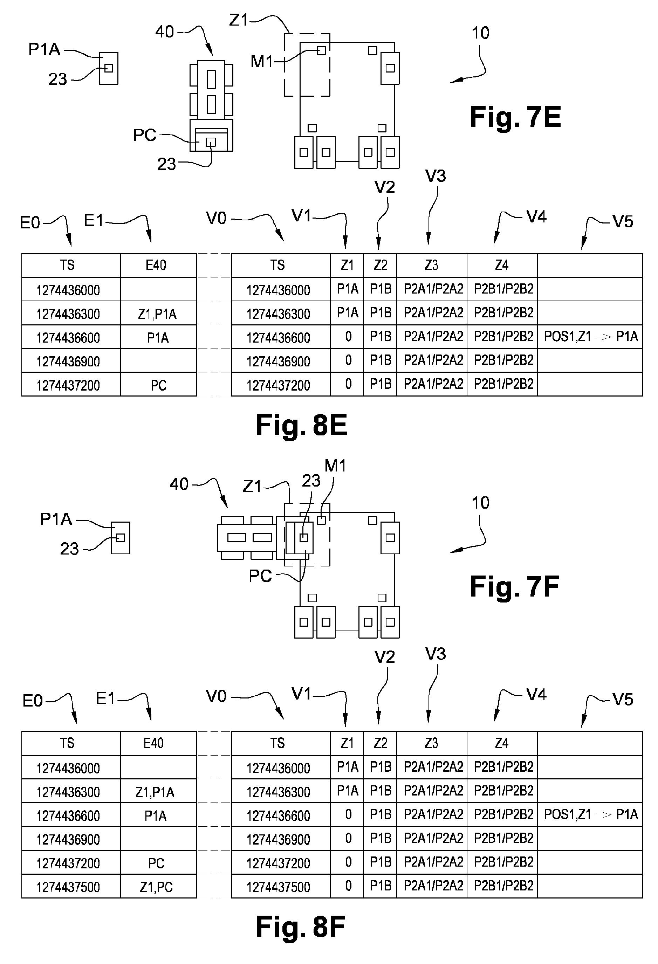

Comme illustré sur la figure 7E, on saisit le pneumatique de remplacement PC. Comme on satisfait les premières conditions prédéterminées, on active les moyens d'identification 23 du pneumatique de remplacement PC et on détermine un l'identifiant PC. On met alors à jour la base de données au moyen de données d'actualisation comprenant l'identifiant PC associé à l'engin 40. Comme illustré sur la figure 8E, la colonne E2 comprend donc l'identifiant PC.

Comme illustré sur la figure 7F, l'engin 40 pénètre à nouveau dans la zone Z1 et on remplace le pneumatique à remplacer P1A par le pneumatique de remplacement PC sur le véhicule 10. Comme on satisfait les premières conditions prédéterminées, on active les moyens d'identification M1 de la zone spatiale de travail Z1 et on détermine l'identifiant Z1. Simultanément, comme on satisfait également les deuxièmes conditions prédéterminées, on active les moyens d'identification 23 du pneumatique de remplacement PC et on détermine l'identifiant PC. On met à jour la base de données au moyen de données d'actualisation au moyen de données d'actualisation comprenant l'identifiant du pneumatique de remplacement PC et l'identifiant de la zone spatiale de travail Z1. Comme illustré sur la figure 8F, la colonne E1 comprend les identifiants Z1 et PC.

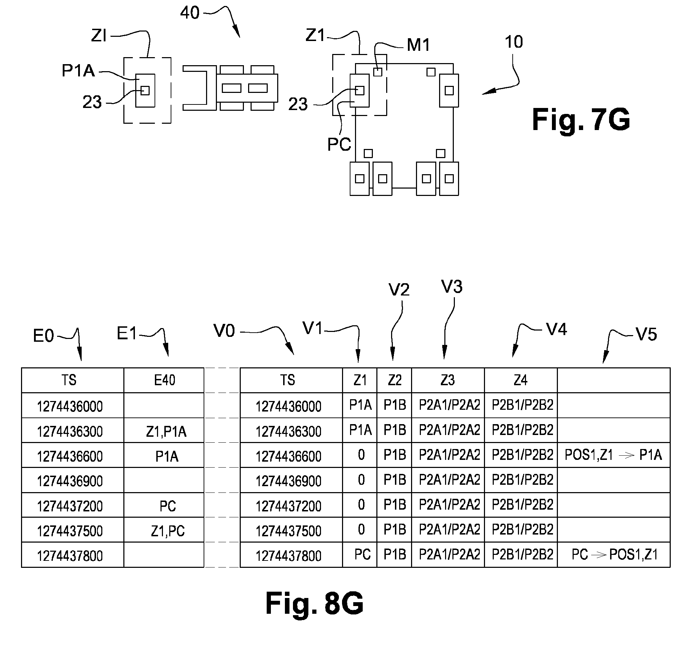

Comme illustré sur la figure 7G, l'engin 40 sort de la zone Z1, c'est-à-dire qu'il se déplace dans une position dans laquelle on ne satisfait pas les premières conditions prédéterminées. En outre, on ne satisfait plus les deuxièmes conditions prédéterminées. L'étape illustrée à la figure 7F durant laquelle on satisfait les premières et deuxièmes conditions prédéterminées simultanément au moins une fois précède directement l'étape illustrée à la figure 7G durant laquelle on ne satisfait ni les premières, ni les deuxièmes conditions prédéterminées. On met alors à jour la base de données B au moyen de données d'actualisation comprenant des données relatives à notamment l'association entre l'identifiant de la zone spatiale de travail Z1 et l'identifiant du pneumatique de remplacement PC. Comme illustré sur la figure 8G, l'algorithme gérant la mise à jour de la base de donnée a donc détecté que le pneumatique PC était désormais associé à la zone de travail Z1. La colonne V1 comprend donc désormais l'identifiant PC qui symbolise l'association du pneumatique PC à la zone de travail Z1. La colonne V5 comprend PC → POS1, Z1 qui indique bien que le pneumatique PC a été installé sur la position 1 de la zone Z1 du véhicule 10.

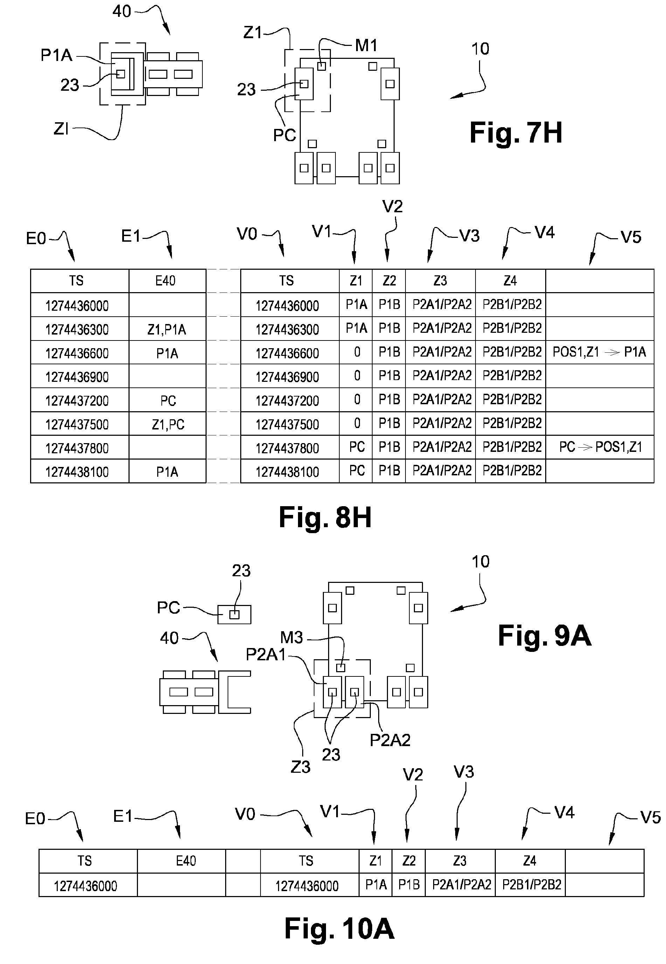

On a représenté sur la figure 7H, l'engin 40 déplaçant le pneumatique P1A depuis sa zone de stockage intermédiaire ZI vers une zone de stockage finale ZF. On met alors à jour la base de données au moyen de données d'actualisation. La deuxième condition étant satisfaite, la colonne E1 comprend l'identifiant P1A comme cela est représenté sur la figure 8H.

On va maintenant décrire un procédé de gestion de la base de données B -ne faisant pas partie de l'invention-en référence aux figures 9A à 9K et 10A à 10K. Sur ces figures on a illustré différentes étapes d'un remplacement du pneumatique à remplacer P2A2 par un pneumatique de remplacement PC. On décrira le procédé selon le deuxième mode de réalisation de façon simplifiée par rapport au procédé selon le premier mode de réalisation.

On a représenté sur la figure 9A le véhicule 10 comprenant le pneumatique P2A2 à remplacer, le pneumatique de remplacement PC et l'engin de manutention 40. Les colonnes V1-V4 contiennent les derniers statuts connus pour le véhicule 10. Aucune opération n'ayant été effectuée précédemment, la colonne V5 est vide.

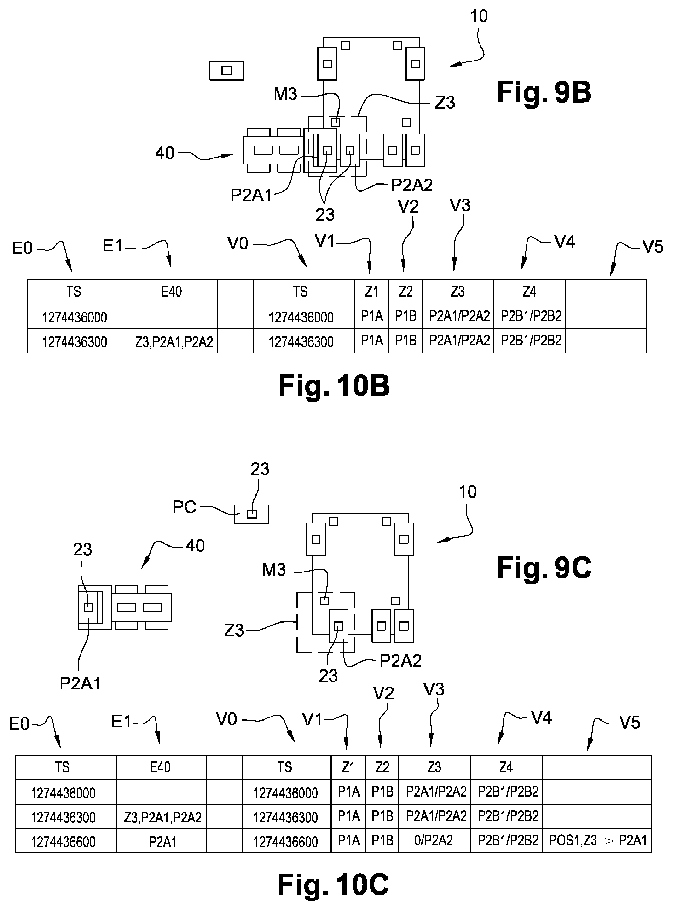

Comme illustré sur la figure 9B, l'engin 40 pénètre dans la zone Z3, dite de travail, et saisit le pneumatique P2A1. Ce pneumatique est alors assimilé au pneumatique à remplacer. Comme on satisfait les premières conditions prédéterminées, on active les moyens d'identification M3 de la zone spatiale de travail Z3 et on détermine l'identifiant Z3. Simultanément, comme on satisfait également les deuxièmes conditions prédéterminées, on active les moyens d'identification 23 du pneumatique à remplacer P2A2 mais également ceux du pneumatique P2A1 et on détermine les identifiants P2A1, P2A2. On met alors à jour la base de données au moyen de données d'actualisation comprenant les identifiants des pneumatiques P2A1, P2A2 et l'identifiant de la zone spatiale de travail Z3. Comme illustré sur la figure 10B, la colonne E1 comprend les identifiants de la zone Z3 et des pneumatiques P2A1, P2A2.

Puis, on retire le pneumatique P2A2 du véhicule 10 comme illustré sur la figure 9C. Comme illustré sur la figure 10C, comme on satisfait les deuxièmes conditions prédéterminées pour le pneumatique P2A1, la colonne E1 comprend toujours l'identifiant P2A1 mais plus les identifiants P2A2 et Z3. En effet, lors de cette étape, on ne satisfait pas les premières conditions prédéterminées et on ne satisfait plus les deuxièmes conditions prédéterminées pour le pneumatique P2A2. L'étape illustrée à la figure 9C durant laquelle seules les deuxièmes conditions prédéterminées sont satisfaites pour le pneumatique P2A1 fait directement suite à l'étape illustrée à la figure 9B durant laquelle les premières et deuxièmes conditions prédéterminées sont satisfaites simultanément au moins une fois. On met donc à jour la base de données B au moyen de données d'actualisation comprenant notamment des données relatives à l'association entre l'identifiant Z3 de la zone spatiale de travail et l'identifiant du pneumatique à remplacer P2A1. L'algorithme gérant la mise à jour de la base de donnée a donc détecté que le pneumatique P2A1 n'est plus associé à la zone de travail Z3. La colonne V3 comprend donc 0/P2A2 qui symbolise l'absence de pneumatique dans la position 1 de la zone de travail Z3. La colonne V5 comprend POS1, Z3 → P2A1 qui indique que le pneumatique P2A1 a été retiré de la position 1 de la zone Z3 du véhicule 10.

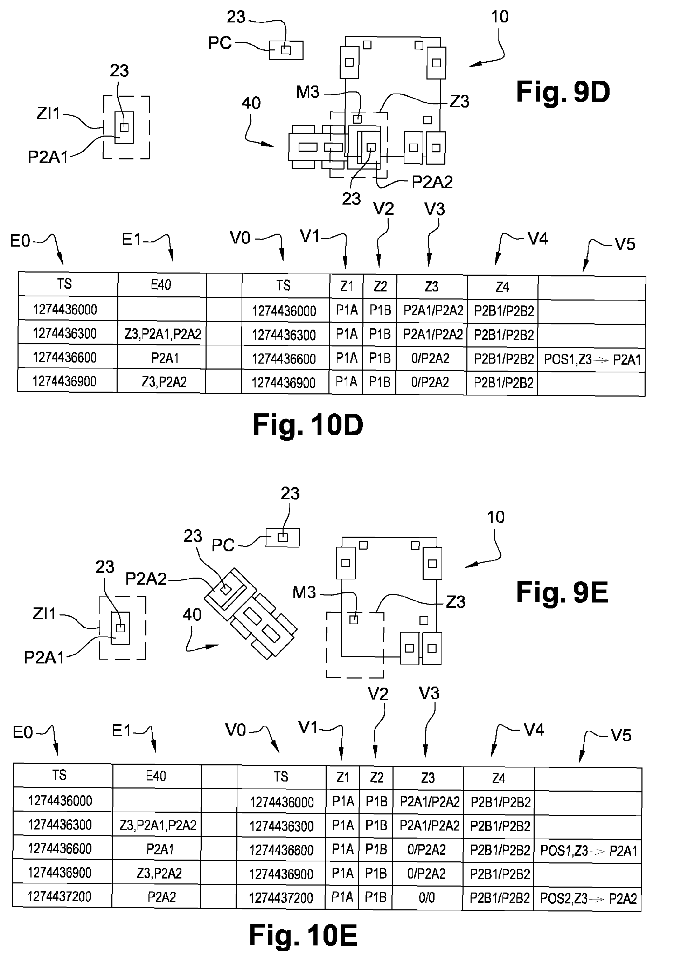

Comme représenté sur la figure 9D, on a déplacé le pneumatique P2A1 à remplacer depuis la zone de travail Z3 du véhicule 10 vers une première zone de stockage intermédiaire ZI1. La première zone de stockage intermédiaire ZI1 est située à une distance du véhicule 10 telle que les moyens d'identification 23 pneumatique P2A1 ne pourront plus être activés, ni lus intempestivement par les moyens d'activation 61 et de lecture 71 de l'engin 40 simultanément avec des moyens d'identification 23 d'un autre pneumatique. Puis, l'engin 40 pénètre à nouveau dans la zone Z3 et saisit le pneumatique P2A2.

Le pneumatique P2A2 est désormais assimilé au pneumatique à remplacer. Comme on satisfait les premières conditions prédéterminées, on active les moyens d'identification M3 de la zone spatiale de travail Z3 et on détermine l'identifiant Z3. Simultanément, comme on satisfait les deuxièmes conditions prédéterminées pour le pneumatique P2A2, on active les moyens d'identification 23 du pneumatique à remplacer P2A2 et on détermine l'identifiant P2A2. On met à jour la base de données au moyen de données d'actualisation comprenant l'identifiant du pneumatique à remplacer P2A2 et l'identifiant de la zone spatiale de travail Z3. Comme illustré sur la figure 10D, la colonne E1 comprend les identifiants de la zone Z3 et du pneumatique à remplacer P2A2.

Puis, on retire le pneumatique P2A2 du véhicule 10 comme illustré sur la figure 9E. Comme illustré sur la figure 10E, comme on satisfait les deuxièmes conditions prédéterminées pour le pneumatique P2A2, la colonne E1 comprend toujours l'identifiant P2A2 mais plus l'identifiant Z3. L'étape illustrée à la figure 9E durant laquelle on satisfait seulement les deuxièmes conditions prédéterminées font directement suite à l'étape illustrée à la figure 9D durant laquelle on satisfait simultanément au moins une fois les premières et deuxièmes conditions prédéterminées. On met donc à jour la base de données B au moyen de données d'actualisation comprenant notamment des données relatives à l'association entre l'identifiant Z3 de la zone spatiale de travail et l'identifiant du pneumatique à remplacer P2A2. L'algorithme gérant la mise à jour de la base de donnée a donc détecté que le pneumatique P2A2 n'est plus associé à la position 2 de la zone de travail Z3. La colonne V3 comprend donc 0/0 qui symbolise l'absence de pneumatique dans les positions 1 et 2 de la zone de travail Z3. La colonne V5 comprend POS2, Z3 → P2A2 qui indique que le pneumatique P2A2 a été retiré de la position 2 de la zone Z3 du véhicule 10.

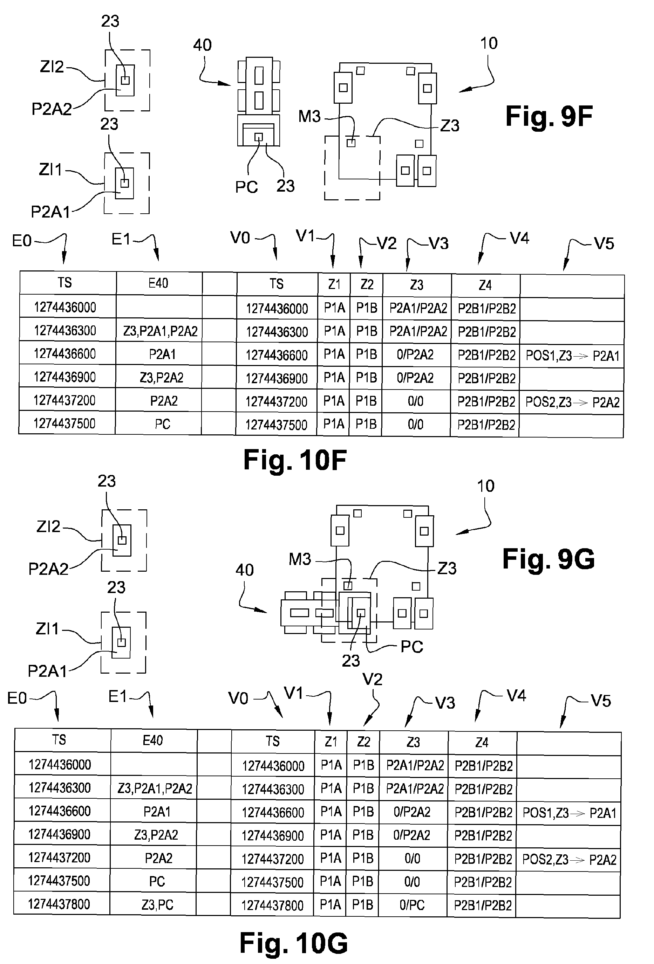

Comme représenté sur la figure 9F, on a déplacé le pneumatique P2A2 à changer depuis le véhicule 10 vers une deuxième zone de stockage intermédiaire ZI2 du pneumatique P2A2. La deuxième zone de stockage intermédiaire ZI2 est située à une distance du véhicule 10 et de la zone ZI1 telle que les moyens d'identification 23 pneumatique P2A2 ne pourront plus être activés, ni lus intempestivement par les moyens d'activation 61 et de lecture 71 de l'engin 40 simultanément avec des moyens d'identification 23 d'un autre pneumatique.

Puis, on saisit le pneumatique de remplacement PC. Comme on satisfait les deuxièmes conditions prédéterminées, on active les moyens d'identification 23 du pneumatique de remplacement PC et on détermine l'identifiant PC. On met alors à jour la base de données au moyen de données d'actualisation. Comme illustré sur la figure 10F, la colonne E1 comprend l'identifiant PC du pneumatique PC.

Comme illustré sur la figure 9G, l'engin 40 pénètre à nouveau dans la zone Z3 et on remplace le pneumatique à remplacer P2A2 par le pneumatique de remplacement PC sur le véhicule 10. Comme on satisfait les premières conditions prédéterminées, on active les moyens d'identification M3 de la zone spatiale de travail Z3 et on détermine l'identifiant Z3. Simultanément, comme on satisfait les deuxièmes conditions prédéterminées, on active les moyens d'identification 23 du pneumatique PC et on détermine l'identifiant PC. On met alors à jour la base de données au moyen de données d'actualisation comprenant l'identifiant du pneumatique de remplacement PC et l'identifiant de la zone spatiale de travail Z3. Comme illustré sur la figure 10G, la colonne E1 comprend les identifiants Z3 et PC associés.

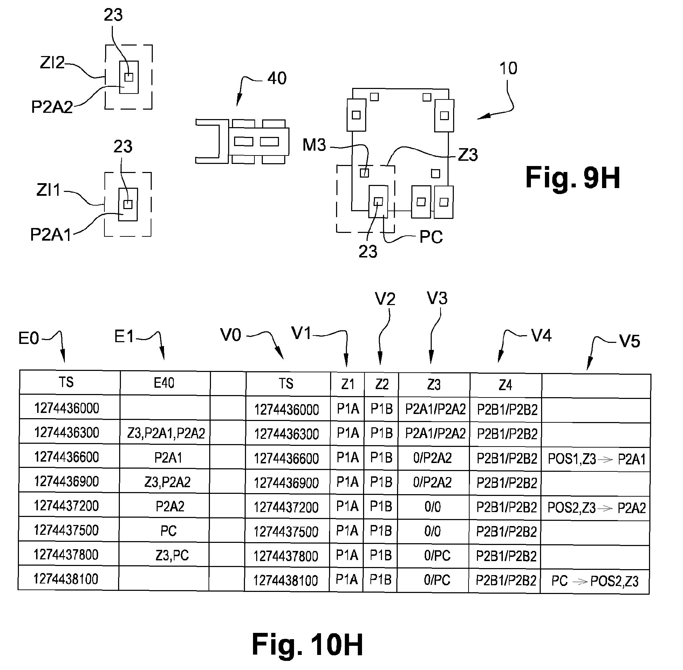

Comme illustré sur la figure 9H, l'engin 40 sort de la zone Z3 en direction de la zone de stockage intermédiaire ZI2. On satisfait simultanément au moins une fois les premières et deuxièmes conditions prédéterminées lors de l'étape illustrée à la figure 9G qui précède directement l'étape 9H durant laquelle ni les premières, ni les deuxièmes conditions prédéterminées ne sont satisfaites. On met alors à jour la base de données au moyen de données d'actualisation comprenant notamment des données relatives à l'association entre l'identifiant Z3 de la zone spatiale de travail et l'identifiant du pneumatique de remplacement PC. Comme illustré sur la figure 10H, l'algorithme gérant la mise à jour de la base de donnée a donc détecté que le pneumatique PC était désormais associé à la zone de travail Z3. La colonne V1 comprend donc désormais l'identifiant PC qui symbolise l'association du pneumatique PC à la zone de travail Z3. La colonne V5 comprend PC → POS2, Z3 qui indique bien que le pneumatique PC a été installé sur la position 2 de la zone Z3 du véhicule 10.

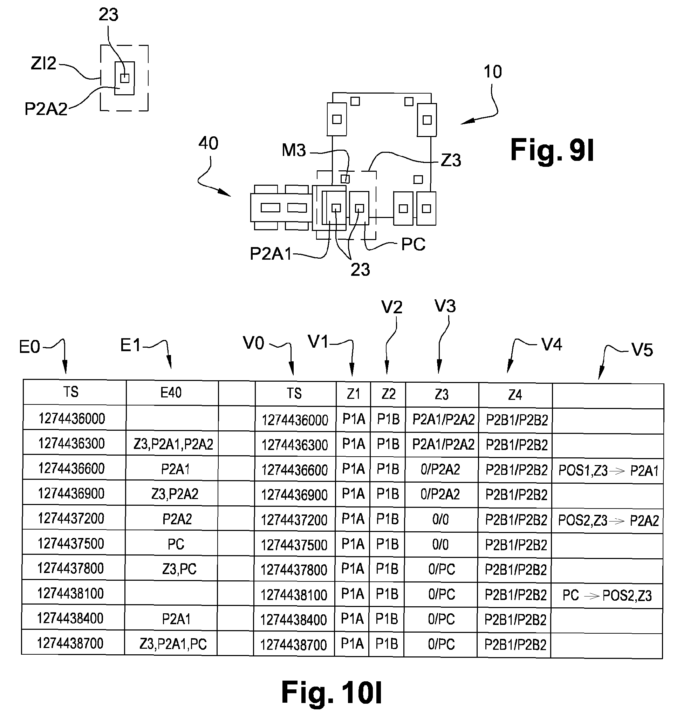

Ensuite, Dans la zone intermédiaire de stockage ZI2, on saisit le pneumatique P2A1. Le pneumatique P2A1 est désormais assimilé au pneumatique de remplacement. Comme on satisfait les deuxièmes conditions prédéterminées pour le pneumatique P2A1, on active les moyens d'identification 23 du pneumatique P2A1 et on détermine l'identifiant P2A1. On met alors à jour la base de données au moyen de données d'actualisation. Cette mise à jour, représentée sur la figure 10I, fait apparaître l'identifiant P2A1 dans la colonne E1.

Comme illustré sur la figure 9I, l'engin 40 pénètre à nouveau dans la zone Z3 et on replace le pneumatique P2A1 sur le véhicule 10. Comme on satisfait les premières conditions prédéterminées, on active les moyens d'identification M3 de la zone spatiale de travail Z3 et on détermine l'identifiant Z3. Simultanément, comme on satisfait les deuxièmes conditions prédéterminées pour les pneumatiques P2A1 et PC, on active les moyens d'identification 23 des pneumatiques P2A1, PC et on détermine les identifiants P2A1, PC. On met alors à jour la base de données au moyen de données d'actualisation comprenant les identifiants Z3, P2A1 et PC. Comme illustré sur la figure 10I, la colonne E1 comprend les identifiants Z3, P2A1 et PC.

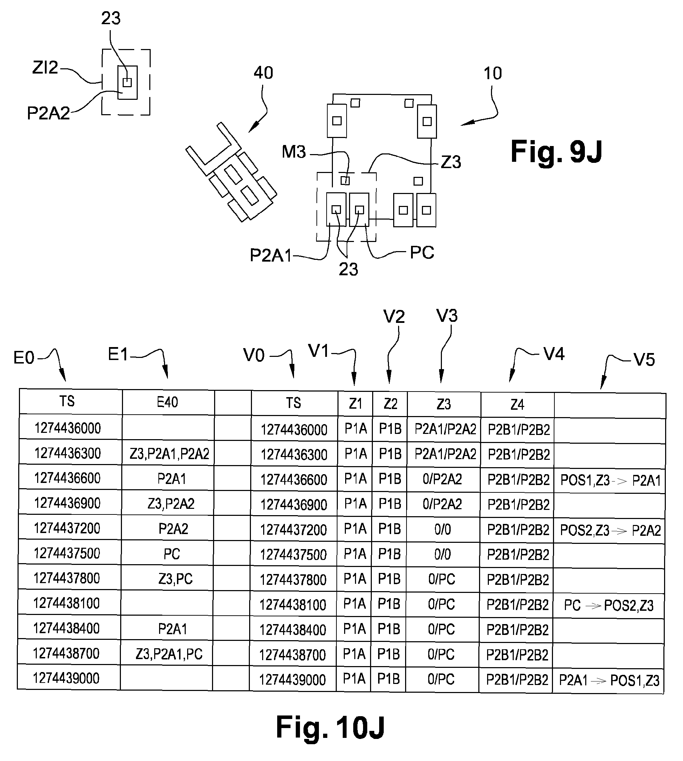

Comme illustré sur la figure 9J, l'engin 40 sort de la zone Z3. On satisfait les premières et deuxièmes conditions prédéterminées simultanément au moins une fois lors de l'étape illustrée à la figure 9I qui précède directement l'étape illustrée à la figure 9J durant laquelle on ne satisfait ni les premières, ni les deuxièmes conditions prédéterminées. On met alors à jour la base de données au moyen de données d'actualisation relatives à l'association entre l'identifiant Z3 de la zone spatiale de travail et l'identifiant du pneumatique à remplacer P2A1. Comme illustré sur la figure 10J, l'algorithme gérant la mise à jour de la base de donnée a donc détecté que le pneumatique P2A1 était désormais associé à la position 1 de la zone de travail Z3. La colonne V3 comprend donc désormais l'identifiant P2A1/PC qui symbolise l'association du pneumatique P2A1 à la position 1 de la zone de travail Z3. La colonne V5 comprend P2A1 → POS1, Z3 qui indique bien que le pneumatique P2A1 a été installé sur la position 1 de la zone Z3 du véhicule 10.

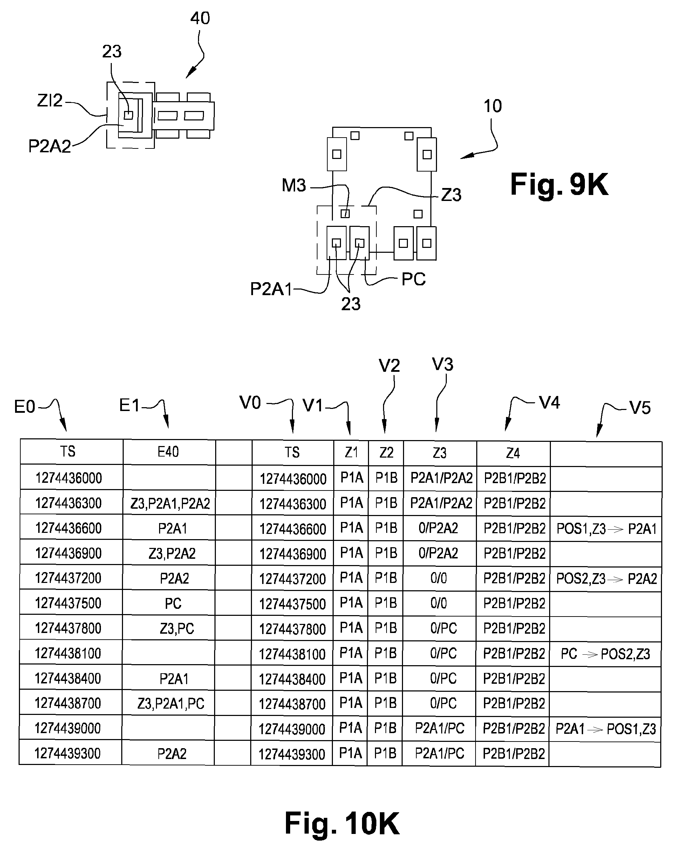

On a représenté sur la figure 9K l'engin 40 déplaçant le pneumatique à remplacer P2A2 depuis sa zone de stockage intermédiaire ZI2 vers une zone de stockage finale ZF. Comme on satisfait les deuxièmes conditions prédéterminées pour le pneumatique à remplacer P2A2, on active les moyens d'identification 23 du pneumatique P2A2 et on détermine l'identifiant P2A2. On met alors à jour la base de données au moyen de données d'actualisation. La colonne E1 comprend l'identifiant P2A2 comme cela est représenté sur la figure 10K.

L'invention ne se limite pas aux modes de réalisation précédemment décrits.

En effet, le véhicule pourra comporter un nombre quelconque de zones. Chaque zone pourra comporter un nombre quelconque de pneumatiques.

Dans un mode de réalisation, l'engin comprend, en plus des moyens décrits ci-dessus ou de façon indépendante, des premier et deuxième moyens de déclenchement respectivement des premiers et deuxièmes moyens d'activation et/ou des premiers et deuxièmes moyens de lecture. Les premiers et deuxièmes moyens de déclenchement sont reliés respectivement à des premiers et deuxièmes moyens de mesure d'un indicateur de la vitesse de l'engin.

Les premier et deuxième moyens de déclenchement des premiers et deuxièmes moyens d'activation sont agencés de sorte que :
- les premiers moyens de déclenchement sont aptes à déclencher les premiers moyens d'activation si les premiers moyens de déclenchement satisfont au moins une première condition prédéterminée associée aux premiers moyens de déclenchement des premiers moyens d'activation; et
- les deuxièmes moyens de déclenchement sont aptes à déclencher les deuxièmes moyens d'activation si les deuxièmes moyens de déclenchement satisfont au moins une deuxième condition prédéterminée associée aux deuxièmes moyens de déclenchement des deuxièmes moyens d'activation.

Les premier et deuxième moyens de déclenchement des premiers et deuxièmes moyens de lecture sont agencés de sorte que :
- les premiers moyens de déclenchement sont aptes à déclencher les premiers moyens de lecture si les premiers moyens de déclenchement satisfont au moins une première condition prédéterminée associée aux premiers moyens de déclenchement des premiers moyens de lecture; et
- les deuxièmes moyens de déclenchement sont aptes à déclencher les deuxièmes moyens de lecture si les deuxièmes moyens de déclenchement satisfont au moins une deuxième condition prédéterminée associée aux deuxièmes moyens de déclenchement des deuxièmes moyens de lecture.

Les premiers et deuxièmes moyens de déclenchement des premiers et deuxièmes moyens d'activation satisfont respectivement les première et deuxième conditions prédéterminée associée respectivement aux premiers et deuxièmes moyens de déclenchement si l'indicateur de vitesse de l'engin est inférieur respectivement à des premiers et deuxièmes seuils prédéterminés associés aux premiers et deuxièmes moyens de déclenchement des moyens d'activation.

Les premiers et deuxièmes moyens de déclenchement des premiers et deuxièmes moyens de lecture satisfont respectivement les première et deuxième conditions prédéterminée associée respectivement aux premiers et deuxièmes moyens de déclenchement si l'indicateur de vitesse de l'engin est inférieur respectivement à des premiers et deuxièmes seuils prédéterminés associés aux premiers et deuxièmes moyens de déclenchement des moyens de lecture.

Par exemple, les seuils associés aux moyens d'activation et de lecture sont tous égaux. Le seuil unique est égal à 5 km/h.

## Revendications

1. Engin de manutention (40) de pneumatiques, destiné à remplacer, sur un véhicule déterminé, un pneumatique à remplacer monté dans une zone spatiale déterminée parmi une pluralité de zones spatiales du véhicule, par un pneumatique de remplacement, comprenant :
- des premiers moyens de lecture (70), du type par onde radio, de moyens d'identification de la zone spatiale déterminée,
- des deuxièmes moyens de lecture (71), du type par onde radio, de moyens d'identification du pneumatique à remplacer ou de remplacement (M1-M4, 23),
les premiers et deuxièmes moyens de lecture (70, 71) étant agencés de sorte que :
- les premiers moyens de lecture (70) sont aptes et destinés à lire les moyens d'identification de la zone spatiale déterminée (M1-M4) si les premiers moyens de lecture (70) satisfont des premières conditions prédéterminées associées aux premiers moyens de lecture (70) et aux moyens d'identification de la zone spatiale déterminée, permettant la réception et la détermination d'un identifiant de la zone spatiale déterminée; et
- les deuxièmes moyens de lecture (71) sont aptes et destinés à lire les moyens d'identification du pneumatique à remplacer ou de remplacement si les deuxièmes moyens de lecture (71) satisfont des deuxièmes conditions prédéterminées associées aux deuxièmes moyens de lecture (71) et aux moyens d'identification du pneumatique à remplacer ou de remplacement, permettant la réception et la détermination d'un identifiant du pneumatique à remplacer ou de remplacement,
l'engin comprenant également des moyens de communication de l'identifiant de la zone spatiale déterminée et de l'identifiant du pneumatique à remplacer ou de remplacement à un centre de communication distant comprenant une base de données (B) de gestion d'une flotte d'au moins un véhicule (10), pour permettre la mise à jour, dans la base de données (B), de l'association entre l'identifiant de la zone spatiale déterminée (Z1; Z3) dans laquelle est située le pneumatique à remplacer (P1A; P2A1, P2A2) ou de remplacement (PC; P2A1, PC) et l'identifiant du pneumatique à remplacer (P1A; P2A1, P2A2) ou de remplacement (PC; P2A1, PC) si on satisfait au moins les premières et deuxièmes conditions prédéterminées simultanément au moins une fois.

2. Engin (40) selon la revendication 1, dans lequel les premières conditions prédéterminées comprennent une première condition prédéterminée associée aux premiers moyens de lecture (70) qui est satisfaite si les premiers moyens de lecture sont situés à une distance inférieure ou égale à une première distance de lecture prédéterminée associée aux premiers moyens de lecture, par rapport aux moyens d'identification de la zone spatiale déterminée (Z1; Z3).

3. Engin (40) selon la revendication 2, comprenant des moyens d'activation (60) des moyens d'identification de la zone spatiale déterminée (Z1; Z3), et dans lequel les premières conditions prédéterminées comprennent une condition prédéterminée associée aux moyens d'activation des moyens d'identification de la zone spatiale déterminée (Z1; Z3).

4. Engin (40) selon la revendication 1, dans lequel les premières conditions prédéterminées comprennent une première condition prédéterminée associée aux premiers moyens de lecture (70) qui est satisfaite si les premiers moyens de lecture (70) sont aptes à émettre un signal par onde radio de lecture (SL1) d'une puissance supérieure ou égale à une première puissance de lecture prédéterminée.

5. Engin (40) selon la revendication 1 ou 4, dans lequel les deuxièmes conditions prédéterminées comprennent une deuxième condition prédéterminée associée aux deuxièmes moyens de lecture qui est satisfaite si les deuxièmes moyens de lecture (71) sont aptes à émettre un signal par onde radio de lecture (SL2) d'une puissance supérieure ou égale à une deuxième puissance de lecture prédéterminée.

6. Engin (40) selon l'une quelconque des revendications 1 à 5 , comprenant des premiers et deuxièmes moyens d'activation (60, 61) respectivement de premiers et deuxièmes moyens à activer (M1-M4, 23), les premiers et deuxièmes moyens d'activation (60, 61) étant agencés de sorte que :
- les premiers moyens d'activation (60) sont aptes à activer les premiers moyens à activer (M1-M4) si les premiers moyens de d'activation (60) satisfont au moins une première condition prédéterminée associée aux premiers moyens d'activation (60); et
- les deuxièmes moyens d'activation (61) sont aptes à activer les deuxièmes moyens à activer (23) si les deuxièmes moyens d'activation (61) satisfont au moins une deuxième condition prédéterminée associée aux deuxièmes moyens d'activation (61).

7. Engin (40) selon la revendication 6, dans lequel les premiers moyens d'activation (60) sont du type par onde radio et satisfont la première condition prédéterminée associée aux premiers moyens d'activation (60) si les premiers moyens d'activation (60) sont aptes à émettre un signal par onde radio d'activation (SA1) d'une puissance supérieure ou égale à une première puissance d'activation prédéterminée.

8. Engin (40) selon la revendication 6 ou 7, dans lequel les deuxièmes moyens d'activation (61) sont du type par radio fréquence et satisfont la deuxième condition prédéterminée associée aux deuxièmes moyens d'activation (61) si les deuxièmes moyens d'activation (61) sont aptes à émettre un signal par onde radio d'activation (SA2) d'une puissance supérieure ou égale à une deuxième puissance d'activation prédéterminée.

9. Véhicule (10) comprenant au moins un pneumatique à remplacer disposé dans une zone spatiale du véhicule (10) déterminée parmi une pluralité de zones spatiales (Z1-Z6) du véhicule (10), **caractérisé en ce que** le pneumatique à remplacer est destiné à être remplacé par un engin selon l'une quelconque des revendications 1 à 8, et **en ce que**:
- chaque zone spatiale déterminée (Z1-Z6) du véhicule comprend des moyens d'identification (M1-M4) de cette zone spatiale déterminée (Z1-Z6), et
- le pneumatique à remplacer comprend des moyens d'identification (23) de ce pneumatique à remplacer destinés à être lus par ledit engin, chaque pneumatique du véhicule (10) étant situé dans une seule zone spatiale prédéterminée (Z1-Z6) du véhicule (10), les moyens d'identification (M1-M4) de la zone spatiale déterminée et du pneumatique à remplacer étant agencés de sorte que :
- les moyens d'identification (M1-M4) d'une zone spatiale déterminée sont lisibles si ces moyens d'identification (M1-M4) satisfont des premières conditions prédéterminées associées à ces moyens d'identification (M1-M4) de cette zone spatiale déterminée et à des premiers moyens de lecture compris dans l'engin (40); et
- les moyens d'identification du pneumatique à remplacer (23) sont lisibles si ces moyens d'identification (23) satisfont des deuxièmes conditions prédéterminées associées à ces moyens d'identification du pneumatique à remplacer (23) et à des deuxièmes moyens de lecture compris dans l'engin (40).

10. Véhicule (10) selon la revendication 9, dans lequel les moyens d'identification (M1-M4) d'une zone spatiale déterminée sont du type par onde radio, les premières conditions prédéterminées comprennent une première condition prédéterminée associée aux moyens d'identification (M1-M4) de la zone spatiale déterminée et satisfont cette première condition prédéterminée associée à ces moyens d'identification (M1-M4) si les moyens d'identification (M1-M4) de la zone spatiale déterminée sont aptes à recevoir un signal par onde radio de lecture (SL1) d'une puissance supérieure ou égale à une première puissance d'identification prédéterminée.

11. Véhicule (10) selon la revendication 9 ou 10, dans lequel les deuxièmes conditions prédéterminées comprennent une deuxième condition prédéterminée associée aux moyens d'identification du pneumatique à remplacer, les-moyens d'identification (23) du pneumatique à remplacer sont du type par onde radio et satisfont la deuxième condition prédéterminée si les deuxièmes moyens d'identification du pneumatique à remplacer (23) sont aptes à recevoir un signal par onde radio de lecture (SL2) d'une puissance supérieure ou égale à une deuxième puissance d'identification prédéterminée.

## Patentansprüche

1. Maschine (40) für die Handhabung von Luftreifen, die dazu bestimmt ist, an einem bestimmten Fahrzeug einen zu ersetzenden Luftreifen, der in einer bestimmten räumlichen Zone unter mehreren räumlichen Zonen des Fahrzeugs montiert ist, durch einen Ersatzluftreifen zu ersetzen, die Folgendes umfasst:
- erste Mittel (70) des Funkwellentyps zum Lesen von Identifizierungsmitteln der bestimmten räumlichen Zone,
- zweite Mittel (71) des Funkwellentyps zum Lesen von Identifizierungsmitteln des zu ersetzenden Luftreifens oder des Ersatzluftreifens (M1-M4, 23), wobei die ersten und zweiten Lesemittel (70, 71) derart ausgelegt sind, dass:
- die ersten Lesemittel (70) dafür geeignet und dazu bestimmt sind, die Identifizierungsmittel der bestimmten räumlichen Zone (M1-M4) zu lesen, falls die ersten Lesemittel (70) erste vorgegebene Bedingungen erfüllen, die den ersten Lesemitteln (70) und den Identifizierungsmitteln der bestimmten räumlichen Zone zugeordnet sind, die das Empfangen und Bestimmen einer Kennung der bestimmten räumlichen Zone ermöglichen; und
- die zweiten Lesemittel (71) dafür geeignet und dazu bestimmt sind, die Identifizierungsmittel des zu ersetzenden Luftreifens oder des Ersatzluftreifens zu lesen, falls die zweiten Lesemittel (71) zweite vorgegebene Bedingungen erfüllen, die den zweiten Lesemitteln (71) und den Identifizierungsmitteln des zu ersetzenden Luftreifens oder des Ersatzluftreifens zugeordnet sind und die das Empfangen und Bestimmen einer Kennung des zu ersetzenden Luftreifens oder des Ersatzluftreifens ermöglichen,
wobei die Maschine außerdem Mittel zum Kommunizieren der Kennung der bestimmten räumlichen Zone und der Kennung des zu ersetzenden Luftreifens oder des Ersatzluftreifens an ein entferntes Kommunikationszentrum umfasst, das eine Datenbank (B) für die Verwaltung einer Flotte aus wenigstens einem Fahrzeug (10) enthält, um in der Datenbank (B) die Zuordnung zwischen der Kennung der bestimmten räumlichen Zone (Z1-Z3), in der sich der zu ersetzende Luftreifen (P1A; P2A1, P2A2) oder der Ersatzluftreifen (PC; P2A1, PC) befinden, und der Kennung des zu ersetzenden Luftreifens (P1A; P2A1, P2A2) oder des Ersatzluftreifens (PC; P2A1, PC) aktualisieren zu können, falls die vorgegebenen ersten und zweiten Bedingungen wenigstens einmal gleichzeitig erfüllt sind.

2. Maschine (40) nach Anspruch 1, wobei die ersten vorgegebenen Bedingungen eine erste vorgegebene Bedingung enthalten, die den ersten Lesemitteln (70) zugeordnet ist und erfüllt ist, falls die ersten Lesemittel sich in einem Abstand, der kleiner oder gleich einem ersten vorgegebenen Leseabstand ist, der den ersten Lesemitteln zugeordnet ist, von den Identifizierungsmitteln der bestimmten räumlichen Zone (Z1; Z3) befinden.

3. Maschine (40) nach Anspruch 2, die Aktivierungsmittel (60) für die Identifizierungsmittel der bestimmten räumlichen Zone (Z1; Z3) umfasst, wobei die ersten vorgegebenen Bedingungen eine vorgegebene Bedingung enthalten, die den Aktivierungsmitteln der Identifizierungsmittel der bestimmten räumlichen Zone (Z1; Z3) zugeordnet ist.

4. Maschine (40) nach Anspruch 1, wobei die ersten vorgegebenen Bedingungen eine erste vorgegebene Bedingung enthalten, die den ersten Lesemitteln (70) zugeordnet ist und erfüllt ist, falls die ersten Lesemittel (70) ein Funkwellen-Lesesignal (SL1) mit einer Leistung, die größer oder gleich einer ersten vorgegebenen Leseleistung ist, senden können.

5. Maschine (40) nach Anspruch 1 oder 4, wobei die zweiten vorgegebenen Bedingungen eine zweite vorgegebene Bedingung enthalten, die den zweiten Lesemitteln zugeordnet ist und erfüllt ist, falls die zweiten Lesemittel (71) ein Funkwellen-Lesesignal (SL2) mit einer Leistung, die größer oder gleich einer zweiten vorgegebenen Leseleistung ist, senden können.

6. Maschine (40) nach einem der Ansprüche 1 bis 5, die erste und zweite Aktivierungsmittel (60, 61) für erste bzw. zweite zu aktivierende Mittel (M1-M4, 23) umfasst, wobei die ersten und zweiten Aktivierungsmittel (60, 61) dafür ausgelegt sind, dass:
- die ersten Aktivierungsmittel (60) die ersten zu aktivierenden Mittel (M1-M4) aktivieren können, falls die ersten Aktivierungsmittel (60) wenigstens eine erste vorgegebene Bedingung erfüllen, die den ersten Aktivierungsmitteln (60) zugeordnet ist; und
- die zweiten Aktivierungsmittel (61) die zweiten zu aktivierenden Mittel (23) aktivieren können, falls die zweiten Aktivierungsmittel (61) wenigstens eine zweite vorgegebene Bedingung erfüllen, die den zweiten Aktivierungsmitteln (61) zugeordnet ist.

7. Maschine (40) nach Anspruch 6, wobei die ersten Aktivierungsmittel (60) vom Funkwellentyp sind und die erste vorgegebene Bedingung, die den ersten Aktivierungsmitteln (60) zugeordnet sind, erfüllen, falls die ersten Aktivierungsmittel (60) ein Funkwellen-Aktivierungssignal (SA1) mit einer Leistung, die größer oder gleich einer vorgegebenen ersten Aktivierungsleistung ist, senden können.

8. Maschine (40) nach Anspruch 6 oder 7, wobei die zweiten Aktivierungsmittel (61) vom Funkfrequenztyp sind und die zweite vorgegebene Bedingung, die den zweiten Aktivierungsmitteln (61) zugeordnet sind, erfüllen, falls die zweiten Aktivierungsmittel (61) ein Funkwellen-Aktivierungssignal (SA2) mit einer Leistung, die größer oder gleich einer zweiten vorgegebenen Aktivierungsleistung ist, senden können.

9. Fahrzeug (10), das wenigstens einen zu ersetzenden Luftreifen, der in einer bestimmten räumlichen Zone des Fahrzeugs (10) unter mehreren räumlichen Zonen (Z1-Z6) des Fahrzeugs (10) angeordnet ist, enthält, **dadurch gekennzeichnet, dass** der zu ersetzende Luftreifen dazu bestimmt ist, durch eine Maschine nach einem der Ansprüche 1 bis 8 ersetzt zu werden, und dass:
- jede bestimmte räumliche Zone (Z1-Z6) des Fahrzeugs Mittel (M1-M4) zum Identifizieren dieser bestimmten räumlichen Zone (Z1-Z6) enthält und
- der zu ersetzende Luftreifen Mittel (23) zum Identifizieren dieses zu ersetzenden Luftreifens, die dazu bestimmt sind, von der Maschine gelesen zu werden, enthält, wobei sich jeder Luftreifen des Fahrzeugs (10) in einer einzigen vorgegebenen räumlichen Zone (Z1-Z6) des Fahrzeugs (10) befindet, wobei die Mittel (M1-M4) zum Identifizieren der bestimmten räumlichen Zone und des zu ersetzenden Luftreifens dafür ausgelegt sind, dass:
- die Mittel (M1-M4) zum Identifizieren einer bestimmten räumlichen Zone lesbar sind, falls diese Identifizierungsmittel (M1-M4) erste vorgegebene Bedingungen erfüllen, die diesen Mitteln (M1-M4) zum Identifizieren dieser bestimmten räumlichen Zone und ersten Lesemitteln, die in der Maschine (40) enthalten sind, zugeordnet sind; und
- die Mittel (23) zum Identifizieren des zu ersetzenden Luftreifens lesbar sind, falls diese Identifizierungsmittel (23) zweite vorgegebene Bedingungen erfüllen, die diesen Mitteln (23) zum Identifizieren des zu ersetzenden Luftreifens und zweiten Lesemitteln, die in der Maschine (40) enthalten sind, zugeordnet sind.

10. Fahrzeug (10) nach Anspruch 9, wobei dann, wenn die Mittel (M1-M4) zum Identifizieren einer bestimmten räumlichen Zone vom Funkwellentyp sind, die ersten vorgegebenen Bedingungen eine erste vorgegebene Bedingung enthalten, die den Mitteln (M1-M4) zum Identifizieren der bestimmten räumlichen Zone zugeordnet sind und diese erste vorgegebene Bedingung, die diesen Identifizierungsmitteln (M1-M4) zugeordnet ist, erfüllt, falls die Mittel (M1-M4) zum Identifizieren der bestimmten räumlichen Zone ein Funkwellen-Lesesignal (SL1) mit einer Leistung, die größer oder gleich einer ersten vorgegebenen Identifizierungsleistung ist, empfangen können.

11. Fahrzeug (10) nach Anspruch 9 oder 10, wobei die zweiten vorgegebenen Bedingungen eine zweite vorgegebene Bedingung enthalten, die den Mitteln zum Identifizieren des zu ersetzenden Luftreifens zugeordnet sind, die Mittel (23) zum Identifizieren des zu ersetzenden Luftreifens vom Funkwellentyp sind und die zweite vorgegebene Bedingung erfüllen, falls die zweiten Mittel (23) zum Identifizieren des zu ersetzenden Luftreifens ein Funkwellen-Lesesignal (SL2) mit einer Leistung, die größer oder gleich einer zweiten vorgegebenen Identifizierungsleistung ist, empfangen können.

## Claims

1. Tyre handling machine (40), for replacement, on a given vehicle, of a tyre to be replaced placed in a predetermined spatial zone amongst a plurality of spatial zones of the vehicle, by a replacement tyre, comprising:
- first reading means (70) of wireless type, of identification means of the predetermined spatial zone,
- second reading means (71) of wireless type, of identification means of the tyre to be replaced or of the replacement tyre (M1-M4, 23),
the first and second reading means (70, 71) being arranged in such a way that:
- the first reading means (70) are able and are intended to read the identification means of the predetermined spatial zone (M1-M4) if the first reading means (70) meet first predetermined conditions associated with the first reading means (70) and with the identification means of the predetermined spatial zone, allowing the reception and determination of an identifier of the predetermined spatial zone; and
- the second reading means (71) are able and are intended to read the identification means of the tyre to be replaced or of the replacement tyre if the second reading means (71) meet second predetermined conditions associated with the second reading means (71) and with the identification means of the tyre to be replaced or of the replacement tyre, allowing the reception and determination of an identifier of the tyre to be replaced or of the replacement tyre,
the machine further comprising communication means of the identifier of the predetermined spatial zone and of the identifier of the tyre to be replaced or of the replacement tyre to a remote communication centre comprising a database (B) for managing a fleet of at least one vehicle (10), to allow the update in the database (B) of the association between the identifier of the predetermined spatial zone (Z1; Z3) in which is placed the tyre to be replaced (P1A; P2A1, P2A2) or of the replacement tyre (PC; P2A1, PC) and the identifier of the tyre to be replaced (P1A; P2A1, P2A2) or the replacement tyre (PC; P2A1, PC) if the first and second predetermined conditions are simultaneously met at least once.

2. Machine (40) according to Claim 1, wherein the first predetermined conditions comprise a first predetermined condition associated with the first reading means (70) that is met if the first reading means (70) are placed at a distance inferior or equal to a first predetermined reading distance associated with the first reading means, with respect to the identification means of the predetermined spatial zone (Z1; Z3).

3. Machine (40) according to Claim 2, comprising activation means (60) for activating the identification means of the predetermined spatial zone (Z1, Z3), and wherein the first predetermined conditions comprise a predetermined condition associated with the activation means of the identification means of the predetermined spatial zone (Z1, Z3).

4. Machine (40) according to Claim 1, wherein the first predetermined conditions comprise a first predetermined condition associated with the first reading means (70) that is met if the first reading means (70) are able to send a wireless reading signal (SL1) with a power greater than or equal to a first predetermined reading power.

5. Machine (40) according to Claim 1 or 4, wherein the second predetermined conditions comprise a second predetermined condition associated with the second reading means (71) that is met if the second reading means (71) are able to send a wireless reading signal (SL2) with a power greater than or equal to a second predetermined reading power.

6. Machine (40) according anyone of Claims 1 to 5, comprising first and second activation means (60, 61) for first and second means to be activated (M1-M4, 23) respectively, the first and second activation means (60, 61) being arranged in such a way that:
- the first activating means (60) are able to activate the first means to be activated (M1-M4) if the first activating means (60) meet at least a first predetermined condition associated with the first activating means (60); and
- the second activating means (60) are able to activate the second means to be activated (23) if the second activating means (61) meet at least a second predetermined condition associated with the second activating means (61).

7. Machine (40) according to Claim 6, wherein the first activating means (60) are of the wireless type and meet the first predetermined condition associated with the first activating means (60) if the first activating means (60) are able to send a wireless activating signal (SA1) with a power greater than or equal to a first predetermined activating power.

8. Machine (40) according to Claim 6 or 7, wherein the second activating means (61) are of the wireless type and meet the second predetermined condition associated with the second activating means (61) if the second activating means (61) are able to send a wireless activating signal (SA2) with a power greater than or equal to a second predetermined activating power.

9. Vehicle (10) comprising at least one tyre to be replaced placed in a predetermined spatial zone of the vehicle (10) amongst a plurality of predetermined spatial zones (Z1-Z6) of the vehicle (10), **characterized in that** the tyre to be replaced is intended to be replaced by a machine according to anyone of claims 1 to 8, and **in that**:
- each predetermined spatial zone (Z1-Z6) of the vehicle comprises identification means (M1-M4) for identifying said predetermined spatial zone (Z1-Z6), and
- the tyre to be replaced comprises identification means (23) of said tyre to be replaced intended to be read by said machine, each tyre of the vehicle (10) being placed in only one predetermined spatial zone (Z1-Z6) of the vehicle, the identification means (M1-M4) of said predetermined spatial zone (Z1-Z6) and of the tyre to be replaced being arranged in such a way that:
- the identification means (M1-M4) of a predetermined spatial zone are readable if said identification means (M1-M4) meet first predetermined conditions associated with the identification means (M1-M4) of said predetermined spatial zone (Z1, Z3) and with first reading means comprised in said machine (40); and
- the identification means of the tyre to be replaced (23) are readable if said identification means (23) meet second predetermined conditions associated with said identification means of the tyre to be replaced (23) and with second reading means comprised in said machine (40).

10. Vehicle (10) according to Claim 9, wherein the identification means (M1-M4) of a predetermined spatial zone are of the wireless type, the first predetermined conditions comprise a first predetermined condition associated with said identification means (M1-M4) of the predetermined spatial zone and meet said first predetermined condition associated with said identification means (M1-M4) if the identification means (M1-M4) of said predetermined spatial zone are able to receive a wireless reading signal (SL1) with a power greater than or equal to a first predetermined identification power.

11. Vehicle (10) according to Claim 9 or 10, wherein the second predetermined conditions comprise a second predetermined condition associated with said identification means of the tyre to be replaced, the identification means (23) of the tyre to be replaced are of the wireless type and meet said second predetermined condition if the second identification means of the tyre to be replaced (23) are able to receive a wireless reading signal (SL2) with a power greater than or equal to a second predetermined identification power.
